(19) Europäisches Patentamt / European Patent Office / Office européen des brevets

(11) **EP 3 510 114 B1**

(12) **EUROPEAN PATENT SPECIFICATION**

(45) Date of publication and mention of the grant of the patent:
**25.08.2021 Bulletin 2021/34**

(21) Application number: **17764833.4**

(22) Date of filing: **12.09.2017**

(51) Int Cl.:
**C09D 175/00** [(2006.01)]

(86) International application number:
**PCT/EP2017/072896**

(87) International publication number:
**WO 2018/046759 (15.03.2018 Gazette 2018/11)**

(54) **DISPERSION**

DISPERSION

DISPERSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.09.2016 EP 16188400**

(43) Date of publication of application:
**17.07.2019 Bulletin 2019/29**

(73) Proprietor: **Covestro (Netherlands) B.V.**
**3434EW Nieuwegein (NL)**

(72) Inventors:
• **SWAANS, Roel Johannes Marinus**
**6100 AA Echt (NL)**
• **GEBHARD, Matthew Stewart**
**6100 AA Echt (NL)**
• **TENNEBROEK, Ronald**
**6100 AA Echt (NL)**
• **OVERBEEK, Gerardus Cornelis**
**6100 AA Echt (NL)**
• **BIEMANS, Koen**
**6100 AA Echt (NL)**
• **HÖNEN, Paulus Johannes Maria**
**6100 AA Echt (NL)**
• **VAN OORSCHOT, Petrus Johannes Maria**
**6100 AA Echt (NL)**

(74) Representative: **Levpat**
**c/o Covestro AG**
**Gebäude K12**
**51365 Leverkusen (DE)**

(56) References cited:
EP-A2- 2 524 943      WO-A1-02/10242
WO-A1-03/089487      WO-A1-2006/104664
WO-A1-2014/085139     US-A1- 2009 111 934

**EP 3 510 114 B1**

**Description**

The present invention relates to a dispersion comprising a carrier fluid and polymers, a process for preparing the dispersion, a coating composition comprising the dispersion and a coating, for example a printing ink or an overprint varnish, obtained from the coating composition.

It is well known to use solvent-borne polymers, such as for example polyamides, nitrocellulose, polyacrylates, polyurethanes, polyesters, polyvinylbutyral, polyvinyl pyrrolidone, hydroxyl propyl cellulose, hydroxyl ethyl cellulose, cellulose acetate butyrate, cellulose acetate propionate, for the provision of a binder material in coating applications such as for example for printing inks and overprint varnishes on paper or plastic substrates. In view of productivity, it is crucial that the drying rate is high, for example in the print industry high line speed printing is commonly applied. Further, there is a need for the coating composition or the resulting coating to have a combination of properties. These include the capability of having a viscosity acceptable for the application, stability of the coating composition, good chemical and physical resistances, and for the printing industry also transfer of the ink from an anilox (an engraved cylinder) to a rubber roller, which prints the ink onto a substrate are important. Chemical resistance includes resistance against water, fat, alcohol and alkaline and for some applications also resistance against coffee and tea.

There is also a need for coatings with low gloss. Also coatings with special feel properties are more and more desired. Feeling and touching is a subconscious process that is regarded very important in the perception of materials. The industry wants their product to stand out and get noticed and packaging surfaces with differentiating feel such as for instance velvet, rubbery, powdery, suede or sandpaper are in high demand. For example a surface with a soft-feel finish is intended to provide a soft, warm touch sensation and also to give a sense of premium quality to the object. Luxurious and sophisticated are words often used to describe the effect a haptic coating can produce.

It is known that for example film forming polyurethanes dissolved in a mild solvent with high evaporation rate (such as for example ethanol), such as for example NeoRez® U-475 obtainable from DSM Coating Resins, may have excellent high speed printability behaviour, i.e. high drying rate and good reversibility property of the ink. However, the obtained coatings have a high gloss and also lack of soft feel property.

It is known that micron sized polymeric particles can enhance the haptic and appearance properties of paints and coatings, see for example WO2010/015494. A commercially available aqueous dispersion offering coatings with a combination of soft feel and a very low gloss is for example NeoRez® R-1010 obtainable from DSM Coating Resins which is an aliphatic waterborne polyurethane dispersion. Waterborne dispersions of micron sized polyurethane particles usually have a solid content of 25-35%. However, in for example the ink printing and the overprint varnish industry, the rate of drying of coating compositions based on such aqueous binder dispersions is too slow in view of the commonly applied high line speed printing. For high line speeds it is essential that the coating compositions dry very fast and that the obtained coating immediately has sufficient blocking resistance . It is well known that coating compositions containing solvents with high evaporation rate (such as for example ethanol) may result in increased drying rate of the coating composition. However, polymeric particles in aqueous polymer dispersions may have a tendency to swell upon addition of organic solvents with high evaporation rate since the polymer may dissolve in such solvents to a certain extent, resulting in poor resistance, reduced blocking behaviour (tackiness) and/or high viscosity making a coating composition containing such aqueous polymer dispersion unusable for example for printing inks. Moreover, the addition of large amounts of solvent to aqueous polymer dispersions may result in the formation of a gel. Also preparing dispersed polymeric particles in solvents with high evaporation rate may result in the formation of a gel, due to the combination of high molecular weight and good solubility.

US6,605,666B1 describes stable polyurethane film-forming dispersions in alcohol-water systems. As described in this patent, a dispersion generally refers to a two-phase system where one phase contains discrete particles distributed throughout a bulk substance, the particles being the disperse phase and the bulk substance the continuous phase. This patent describes that dispersions are possible through the use of polyurethane starting reactants that are insoluble in the alcohol-water solvent system (the so-called "A' Component). A disadvantage of the dispersions as described in this patent is that the obtained coating is still sticky after drying and consequently has a too slow resistance build up against blocking and/or has a high gloss and/or do not have a special feel property, such as for example soft feel. The blocking resistance of a coating is also a very important coating property. Blocking resistance combats the tendency of coatings to stick together (or block). Poor anti-blocking properties cause the two contacting coatings to stick, resulting in tearing or peeling of the coatings upon separation. A high blocking resistance increases production efficiency and avoids potential coating damages when separating two coated surfaces that are stacked or placed in contact with one another during storage, packaging and/or shipping. For printing processes where a film is often rolled up after applying the coating layer, a fast resistance build-up against blocking is a crucial property.

The object of the present invention is to provide a dispersion of polymeric particles in an alcohol containing continuous phase, which dispersion allows to obtain a coating composition with a viscosity acceptable for application and a high drying speed and which is able to provide coatings with low gloss and good blocking resistance.

The object has surprisingly been achieved by providing a dispersion comprising

2

(A) a carrier fluid in an amount from 35 to 95 wt.%, the carrier fluid comprising:

(A1) water, and
(A2) at least one compound selected from the group consisting of ethanol, 1-propanol, 2-propanol, ethyl acetate, n-propyl acetate, isopropyl acetate, acetone, methyl ethyl ketone and any mixture of at least two of these compounds,
whereby the amount of water (A1) relative to the carrier fluid (A) is less than 85 wt.% and the amount of water relative to the dispersion is from 1 to 30 wt.%; and

(B) polymer(s) in an amount from 5 to 65 wt.%, the polymer(s) comprising:
(B1) polymeric particles having a measured volume average particle size from 1 $\mu$m to 20$\mu$m, whereby the polymer of the polymeric particles (B1) has a weight average molecular weight of at least 250 kDaltons, at least 50 wt.% of the polymeric particles (B1) are insoluble in n-methyl pyrrolidone containing 10 mM LiBr and 8 volume percent hexafluoroisopropanol, and the polymer of the polymeric particles (B1) is selected from the group consisting of polyurethane, polyurethane-polyacrylate hybrid and any mixture thereof; and
whereby the amounts of (A) and (B) are given relative to the total amount of (A) and (B).

It has furthermore surprisingly been found that the coating composition according to the invention is able to provide a coating with low dry thickness, i.e. a dry thickness ranging from 0.5 to 150 $\mu$m, even from 0.5 to 50 $\mu$m, even from 1.0 to 20 $\mu$m, more preferred from 1.0 to 10 $\mu$m and most preferred from 1.0 to 5 $\mu$m.

The dispersion according to the invention can be formulated to a wide range of viscosities. The viscosity of the dispersion according to the invention is preferably lower than 5000 mPa.s, more preferably lower than 4000 mPa.s, more preferred lower than 2000 mPa.s and preferably less than 600 mPa.s, most preferred less than 250 mPa.s. The viscosity of the dispersion according to the invention is preferably higher than 10 mPa.s, more preferably higher than 20 mPa.s.

The dispersion according to the invention comprises from 35 to 95 wt.% of carrier fluid (A) and from 5 to 65 wt.% of polymers (B), relative to the amount of (A) and (B). Preferably, the dispersion comprises from 40 to 90 wt.% of carrier fluid (A) and from 10 to 60 wt.% of polymers (B). More preferably, the dispersion comprises from 45 to 85 wt.% of carrier fluid (A) and from 15 to 55 wt.% of polymers (B).

A dispersion refers to a two-phase system where one phase contains discrete particles distributed throughout a bulk substance, the particles being the disperse phase and the bulk substance the continuous phase. The continuous phase of a dispersion is provided at least in part by a carrier fluid. In the present invention, the carrier fluid of the dispersion comprises (A1) water and (A2) at least one compound selected from the group consisting of ethanol, 1-propanol, 2-propanol, ethyl acetate, n-propyl acetate, isopropyl acetate, acetone, methyl ethyl ketone and any mixture of at least two of these compounds, whereby the amount of water (A1) relative to the carrier fluid (A) is less than 85 wt.% and the amount of water relative to the dispersion is from 1 to 30 wt.%.

EP-A-2524943 relates to a process for imbibing a step-growth polymer into thermoplastic latex particles by combining an aqueous dispersion of polymeric particles with a hydrophobic monomer that is capable of forming a polymer by way of step-growth polymerization. US-A-20090111934 is directed to a method for preparing an aqueous polyacrylate modified polyurethane dispersion. WO-A-2006104664 describe a coating composition comprising a latex emulsion comprising crosslinked polymeric microparticles dispersed in an aqueous continuous phase and optionally aqueous polyurethane dispersion comprising polyurethane-acrylate particles dispersed in an aqueous medium. WO-A-03089487 describe coating compositions comprising aqueous polyurethane dispersions and highly crosslinked polymeric particles. WO-A-03054903 describe aqueous coating compositions containing polyurethane-acrylic hybrid polymer dispersions. These patent publications at least do not describe the use of water and ethanol, 1-propanol, 2-propanol, ethyl acetate, n-propyl acetate, isopropyl acetate, acetone and/or methyl ethyl ketone as carrier fluid for the dispersion.

In the present invention, the carrier fluid preferably primarily or principally comprises water (A1) and at least one other (than water) carrier fluid with a vapor pressure higher than water (A2). For example the carrier fluid is at least 90 wt.% (relative to the total carrier fluid) of water and carrier fluid with a vapor pressure higher than water. The carrier fluid may comprise small amounts of carrier fluid with a vapor pressure lower than water, i.e. less than 10 wt.%, more preferably less than 7 wt.%, even more preferably less than 4 wt.% (relative to the total carrier fluid) of carrier fluid with a vapor pressure lower than water may be present. Most preferred 0 wt.% of carrier fluid with a vapor pressure lower than water is present.

The amount of water (A1) relative to the carrier fluid (A) is less than 85 wt.%, preferably less than 60 wt.%, preferably less than 50 wt.%, more preferably less than 40 wt.% and most preferred less than 30 wt.%. The amount of water relative to the dispersion is from 1 to 30 wt.%, more preferably from 1 to 20 wt.%, most preferably from 1 to 15 wt.% and especially preferred from 1 to 10 wt.%.

The rate of drying of a coating composition comprising both a nonvolatile polymer or filler and a carrier fluid (also referred to as liquid carrier) is directly related to the rate of evaporation of the carrier fluid. The rate of evaporation of the carrier fluid in turn is directly related to the vapor pressure of the carrier fluid. This is also true for mixtures of liquid carriers. For ideal mixtures of liquids the vapor pressure is the sum of the vapor pressures of the pure liquids weighted by the mole fraction of that pure liquid. Table 1 lists the vapor pressure in torr for some common liquid carriers as supplied by the Dortmund Data Bank (DDBST GmbH Center for Applied Thermodynamics; Marie-Curie-Str. 10; D-26129 Oldenburg, Germany). Water has a lower vapor pressure than ethanol, 2-propanol, and ethyl acetate, thus mixtures of liquid carriers containing these or other higher vapor pressure liquid carriers will evaporate faster, thus leading to quicker drying coatings. This invention makes use of this effect to increase the drying speed of the coating composition. Adequate increases in drying speed require significant replacement of the less volatile water.

Table 1

| Liquid carrier | Vapor pressure (at 20°C) (kPa) |
|---|---|
| Water | 2.33 |
| Ethanol | 5.81 |
| 2-propanol | 4.24 |
| Ethyl Acetate | 9.85 |

In many cases mixtures of liquids deviate from ideal behaviour, and the mixture may have a higher or lower vapor pressure than predicted by simply the mole fraction weighted average of the pure liquid vapor pressures. These types of mixtures are known as azeotropes. A very relevant example of such an azeotrope is a mixture of ethanol and water. A mixture of water will have the highest vapor pressure and thus the fastest evaporation rate at the azeotropic mixture (Table 2), which in the case of water and ethanol is 4% water and 96% ethanol. This means that a mixture of 4% water and 96% ethanol evaporates faster than even pure ethanol. Thus in the case of common alcohols having some water in the composition the drying rate is actually speeded up, despite the fact that water is less volatile. In many cases it is possible to increase the evaporation rate of a solvent mixture by adding carefully selected amounts of water to the mixture. This is also true for ethyl acetate-ethanol-water mixtures. In this invention, it is preferred to take advantage of such azeotropic effects by including some water in the carrier fluid to speed the drying rate of the coating compositions. A preferred mixture is ethyl acetate-ethanol-water. An even more preferred mixture is ethanol-water.

Table 2 *(CRC Handbook of Chemistry and Physics,* 44th ed. pp 2143-2184)

| Liquid Mixture | Azeotropic Ratio |
|---|---|
| Water-Ethanol | 96%water/4%Ethanol |
| Water-2-Propanol | 12%water/88%2-Propanol |
| Water - n-Propanol | 28%water/72%n-Propanol |
| Ethanol - Ethyl Acetate | 31%Ethanol/69% Ethyl Acetate |

Preferably, compound (A2) comprises ethanol, 1-propanol, 2-propanol or a mixture of at least two of these compounds. More preferably at least 20 wt.% of compound (A2) is ethanol, 1-propanol, 2-propanol or a mixture of at least two of these compounds. Even more preferably at least 50 wt.% of compound (A2) is ethanol, 1-propanol, 2-propanol or a mixture of at least two of these compounds. Even more preferably at least 75 wt.% of compound (A2) is ethanol, 1-propanol, 2-propanol or a mixture of at least two of these compounds. Most preferably at least 90 wt.% of compound (A2) is ethanol, 1-propanol, 2-propanol or a mixture of at least two of these compounds. In a preferred embodiment compound (A2) consists of ethanol, 1-propanol, 2-propanol or a mixture of at least two of these compounds, and ethyl acetate, whereby the amount of ethyl acetate is preferably at most 50 wt.% (relative to compound (A2)), more preferably at most 25 wt.%, even more preferably at most 10 wt.%, even more preferably at most 2 wt.% and most preferably 0 wt.%. In a more preferred embodiment compound (A2) consists of ethanol and ethyl acetate, whereby the amount of ethyl acetate is preferably at most 50 wt.% (relative to compound (A2)), more preferably at most 25 wt.%, even more preferably at most 10 wt.%, even more preferably at most 2 wt.% and most preferably 0 wt.%.

The dispersion according to the invention comprises polymeric particles (B1) having a volume average particle size from $1 \mu m$ to $20\mu m$, preferably from $1.4 \mu m$ to $14 \mu m$ and more preferably from $2 \mu m$ to $10 \mu m$. The volume average particle size is determined by the following two-step method: First the analysis was done using dynamic light scattering (DLS). This technique is well suited to measure particle size of particles of less than 0.5 microns. If the DLS particles size measurement indicates the particles are in the micron range then a laser diffraction technique was used. Laser diffraction works better for micron sized particles. If the particle size from DLS is less than 0.5 microns then this value is accepted and no laser diffraction measurement is done. DLS measurements were done on a Malvern Nanosizer ZS using disposable cuvettes. Analysis was done in backscatter mode (173°) at 25°C with 2 minute equilibration. Calculation parameters: sample refractive index 1.590; sample absorption 0.01; medium refractive index 1.365; medium viscosity 2.06 mPa.s. The samples were diluted in a mixture of 3:1 ethanol:water by volume to achieve appropriate scattering levels. Particle size measurements using laser diffraction were determined using a *Mastersizer 2000* laser diffraction particle size analyzer. The values reported are the volume average particle sizes D(4,3).

The particle size (D[0.5]) of the polymeric particles (B1) present in the dispersion according to the invention is preferably greater than 1 micron, more preferably greater than 1.2 micron and especially preferred greater than 1.5 micron. The (D[0.5]) is the particle size at which 50% of the particles is below that size and 50% is above. The particle size (D[0.9]) of the polymeric particles (B1) is preferably less than 50 micron, more preferably less than 35 micron, more preferably less than 20 micron and especially preferred less than 10 micron. The (D[0.9]) is the particle size at which 90% of the particles is below that size and 90% is above. The particle size (D[0.5]) and D[0.9]) is measured according to the method using laser diffraction as described above.

The polymer of the polymeric particles (B1) has a weight average molecular weight of at least 250 kDaltons and more preferably of at least 350 kDaltons. Preferably the polymeric particles (B1) are crosslinked during their preparation. As used herein, the weight average molecular weight of the polymeric particles (B1) present in the dispersion according to the invention is measured according to the following method:

The weight average molecular weight $M_w$ of the polymeric particles (B1) is determined by mixing 15 milligrams of the dispersion containing the polymeric particles (B1) with 1.5 milliliters of n-methyl pyrrolidone containing 10 mM LiBr and 8 volume percent hexafluoroisopropanol to obtain a sample. Then the sample is filtered with a 0.45 $\mu$m filter and run on a Waters Alliance HPLC 2695 with a Waters DRI detector type 2410. 3x Mixed-B columns with mixed-B precolumn were used for the separation with 1 mL/min flow at 70°C. Thirteen polystyrene standards from 685 to 1780000 Da were used as a calibration for the molecular weight determination. The reported $M_w$ in this case is the value given from the instrument excluding all peaks measured below 1 kDa and is the weight average molecular weight of the soluble portion of the polymeric particles ($M_w(s)$) (soluble in n-methyl pyrrolidone containing 10 mM LiBr and 8 volume percent hexafluoroisopropanol).

To account for the presence of an insoluble portion of the polymeric particles which is insoluble in n-methyl pyrrolidone containing 10 mM LiBr and 8 volume percent hexafluoroisopropanol, the amount of the insoluble portion of the polymeric particles ($W_{ins}$) was determined using the following test:

30 mg of dried polymeric particles were obtained by freeze-drying the dispersion containing the polymeric particles. The dried polymeric particles were placed in a 3 mL centrifuge vial. Two mL n-methyl pyrrolidone (NMP) containing 10 mM LiBr and 8 volume percent hexafluoroisopropanol was placed over the sample and the mixture was stored for 18hrs. The insoluble portion was removed via centrifugation using a tabletop Silverline MiniStar centrifuge (2000RCF). The amount of dissolved polymer in the solution was determined gravimetrically after evaporation of the solvent at 150°C for 30 minutes. This gives the % of the polymer dissolved in the liquid (the weight percent of the soluble portion ($W_s$)). The weight percent of the soluble portion ($W_s$) was used to calculate the weight % of the insoluble portion of the polymeric particles ($W_{ins}$). The total of $W_s$ and $W_{ins}$ being equal to 100%. In this case the overall $M_w$ of the polymeric particles (B1) is given by the following equation:

$$M_w = (W_s)X(M_w(s)) + (W_{ins})X600,000$$

For example if polymeric particles X have 30% soluble polymer and 70% insoluble polymer, and the $M_w(s)$ of the soluble polymer is 50000 than:

$$M_w = 0,3X50KDa + 0,7X600KDa = 435KDa$$

The polymer of the polymeric particles (B1) is selected from the group consisting of polyurethane, polyurethane-polyacrylate hybrid and any mixture thereof. In case the polymeric particles (B1) comprises polyurethane-polyacrylate hybrid, the polyurethane/polyacrylate ratios are preferably above 20:80, more preferably above 50:50, more preferably above 70:30, more preferably above 80:20, and even more preferably above 85: 15. The polyacrylate of the polyurethane-polyacrylate hybrid particles B1 preferably has an acid value of less than 20 mg KOH/g of polyacrylate, more preferred less than 10, even more preferred less than 5 and most preferred zero. Methods for preparing polyurethanes are known in the art and are described in for example the Polyurethane Handbook 2nd Edition, a Carl Hanser publication, 1994, by G. Oertel. Polyurethanes may be prepared in a conventional manner by reacting at least one organic polyisocyanate with at least one isocyanate-reactive component by methods well known in the prior art. Isocyanate-reactive groups include -OH, -SH, - NH-, and —NH$_2$. Usually an isocyanate-terminated polyurethane prepolymer is first formed which is then chain extended with an active hydrogen containing compound like polyamines. By a polyurethane-polyacrylate hybrid is meant that a vinyl polymer is prepared by the polymerisation of at least one vinyl monomer in the presence of a polyurethane. A polyurethane-polyacrylate hybrid is generally obtained by free-radical polymerization of at least one vinyl monomer in the presence of a polyurethane, preferably in the presence of a chain extended polyurethane. Examples of typical vinyl monomers that can be used for synthesizing the vinyl polymer of the polyurethane-polyacrylate hybrid particles include but are not limited to (meth)acrylates like methyl(meth)acrylate, ethyl(meth)acrylate, butyl(meth)acrylate, 2-ethylhexyl(meth)acrylate, acrylonitrile, styrene, alpha-methylstyrene, diacetoneacrylamide, acetoacetoxyethylmethacrylate, hydroxyethyl(meth)acrylate, (meth)acrylamide and derivatives. The vinyl polymer could also include monomers which impart in situ crosslinking in the polymer; examples of such monomers include allyl methacrylate, trimethylolpropane triacrylate, tetraethylene glycol dimethacrylate, and divinyl benzene. Free acid functional vinyl monomers such as methacrylic acid should preferably not be employed since they may destabilize the dispersion. Preferably, the vinyl monomers used to prepare the vinyl polymer is methyl methacrylate, butyl acrylate, butyl methacrylate, acrylonitrile, styrene or any mixture of two or more of said monomers, and optionally diacetoneacrylamide and/or monomers which impart in situ crosslinking in the vinyl polymer. The vinyl monomer(s) are polymerized using a conventional free radical yielding initiator system. Suitable free radical yielding initiators include mixtures partitioning between the aqueous and organic phases. Suitable free-radical-yielding initiators include inorganic peroxides such as ammonium persulphate hydrogen peroxide, organic peroxides, such as benzoyl peroxide, alkyl hydroperoxides such as t-butyl hydroperoxide and cumene hydroperoxide; dialkyl peroxides such as di-t-butyl peroxide; peroxy esters such as t-butyl perbenzoate and the like; mixtures may also be used. The peroxy compounds are in some cases advantageously used in combination with suitable reducing agents (redox systems) such as iso-ascorbic acid. Azo compounds such as azobisisobutyronitrile may also be used. Metal compounds such as Fe.EDTA (EDTA is ethylene diamine tetracetic acid) may also be usefully employed as part of the redox initiator system. The amount of initiator or initiator system to use is conventional, e.g. within the range of 0.05 to 6 wt% based on the weight of vinyl monomer used.

The dispersion comprises polymeric particles (B1) having a volume average particles size and weight average molecular weight as defined above. At least 50 wt.%, preferably at least 70 wt.%, more preferably at least 80 wt.%, most preferably at least 90 wt.% of the polymeric particles (B1) are insoluble in n-methyl pyrrolidone (NMP) containing 10 mM LiBr and 8 volume percent hexafluoroisopropanol. The weight % of the insoluble (insoluble in n-methyl pyrrolidone containing 10 mM LiBr and 8 volume percent hexafluoroisopropanol) portion of the polymeric particles (Wins) is determined as described above. It has surprisingly been found that the presence of an increased amount of the insoluble portion of polymeric particles (B1) may result in improved blocking resistance and/or that the low gloss can be retained over a prolonged period of time and/or at increased temperature. The amount of polymeric particles (B1) having a volume average particles size and weight average molecular weight as defined above present in the dispersion according to the invention is preferably at least 25 wt.%, more preferably at least 50 wt.%, more preferably at least 75 wt.% and even more preferably at least 85 wt.%, relative to the total amount of polymer(s) (B) present in the dispersion. It has surprisingly been found that the presence of higher amounts of polymeric particles (B1) as claimed may result in improved coating performance and/or may result in a coating having a special feel property, in particular a soft feel. The polymeric particles (B1) are preferably spherical as identified with microscopy.

The total amount of the carrier fluid (A) and the polymer(s) (B) present in the dispersion according to the invention is preferably from 80 to 100 wt.%, more preferably from 92 to 100 wt.% (relative to the dispersion).

The polymer of the polymeric particles (B1) is preferably a polyurethane preferably being the reaction product of at least the following components:

(a) from 10 to 50 wt.%, preferably from 12 to 45 wt.% more preferably from 15 to 40 wt% of at least one organic polyisocyanate with a functionality of at least 2,
(b) from 0 to 4 wt.%, preferably from 0.5 to 4 wt.%, 0.7 to 3 wt.% and even more preferably from 1 to 2 wt.% of an isocyanate-reactive compound containing ionic or potentially ionic water-dispersing groups preferably having a molecular weight of from 100 to 500 g/mol,
(c) from 35 to 85 wt.%, preferably from 40 to 79 wt.% and even more preferably from 45 to 75 wt.% of at least one isocyanate-reactive polyol other than (b) preferably having a molecular weight from 500 to 5000,
(d) from 0 to 10 wt.%, preferably from 0.25 to 7 wt.% and more preferably from 0.5 to 5 wt.% of at least one active-hydrogen chain extending compound with a functionality of at least 2 (other than water),
where the amounts of (a), (b), (c) and (d) are given relative to the total amount of (a), (b), (c) and (d), and
where the isocyanate and hydroxy groups on the components used to prepare the polyurethane are present in a respective mole ratio (NCO to OH) in the range of from 0.8:1 to 5:1, preferably from 1.2:1 to 4:1 and even more preferably from 1.5:1 to 3.5:1.

In the special case when component b is 0 wt.%, component (c) preferably comprises from 1 to 50 wt.%, more preferably from 2 to 35 wt.%, most preferably from 5 to 25 wt. % polyols comprising polypropylene glycol ether or polypolyethylene glycol ethers - or any combination - with an average molecular weight of from 500 to 8000 Daltons acting as stabilizer groups. Preferably the hydroxyl functionality of these polyether polyols is at most 2, more preferably 1 (mono functional) and therefore located at the end of the polymer chain.

Introduction of branching to the polymer backbone is a suitable way to obtain high weight average molecular weight polymeric particles (B1). In view of this, the polymeric particles (B1) are preferably a preformed 3-dimensional network. The preformed 3-dimensional network is preferably effected by further using at least one of the following branching components (e) with an average functionality above 2:

(e1) from 5 to 50 wt.%, more preferably from 15 to 45 wt. %, even more preferably from 20 to 40 wt.% of component (a) comprising at least one organic polyisocyanate with an average functionality of > 2.3, more preferably > 2.5, and most preferred >2.9;

(e2) from 1 to 40 wt.%, preferably from 1.5 to 20 wt.%, more preferably from 2 to 10 wt.% of component (c) comprising at least one polyol having a molecular weight of from 500 to 5000 g/mol and an average functionality of at least 2.3, more preferably at least 2.6, most preferably at least 2.9, and preferably a glass transition temperature $T_g$ from -110°C to +110°C;

(e3) from 1 to 10 wt%, preferably from 1.5 to 7 wt%, most preferably from 2 to 5 wt% of component (c) [in case component (c) comprises isocyanate-reactive polyol having a molecular weight as claimed for component (e3)] comprising a polyol having a molecular weight of from 90 to 499 g/mol, preferably from 120 to 400 g/mol, more preferably from 125 to 350 g/mol and a hydroxyl functionality higher than 2;

(e4) at least 20wt.%, preferably at least 35 wt%, most preferably at least 50wt%, especially preferred at least 70wt% of component (d) comprising at least one active-hydrogen chain extending compound with a functionality of 3 or higher.

In a preferred embodiment, the active-hydrogen chain extending compound with a functionality of 3 or higher (e4) is a polyamine with a functionality of 3.

Preferably the polyurethane prepolymers are prepared with a NCO/OH ratio of from 0.8 to 2.3, more preferably from 1.1 to 2, most preferably from 1.3 to 1.9 by only using part of component (a) and after the prepolymer reaction has reached conversion > 90% more preferably > 95% the rest of the component (a) is added, preferably the part that corresponds with (e1) so that the total NCO to OH mole ratio is in the range of from 0.8:1 to 5:1, preferably from 1.2:1 to 4:1 and even more preferably from 1.5:1 to 3.5:1.

Preferably, the total amount of active-hydrogen chain extending compound employed, if used, (apart from water) is such that the molar ratio of active hydrogens in the chain extender to isocyanate groups in the polyurethane prepolymer (obtained by reacting at least components (a), (b) and (c)) preferably is in the range from 0.1:1 to 2:1, more preferably 0.6:1 to 1.4:1, more preferably from 0.7:1 to 1.1:1 and especially preferred from 0.8:1 to 0.98:1.

An alternative for using branching components when preparing the polymeric particles (B1), the polymeric particles (B1) may also comprise polyurethanes with unsaturated groups [C=C] like (meth)acryloyl or vinyl groups in the backbone for instance using hydroxy ethyl (meth) acrylate as a raw material during the synthesis of the polyurethane and these act as graftable sites when preparing the urethane-acrylic hybrid during polymerization of the vinylic monomers.

The acid value of the polymeric particles (B1) is preferably from 2 to 20 mg KOH/g, more preferably from 3 to 15 mg KOH/g and most preferred from 4 to 10 mg KOH/g. As used herein, the acid value is determined according to ASTM D 1639 — 90: Standard Method for Acid Value of Organic Coating Materials.

Component (a)

Component (a) is at least one organic polyisocyanate with a functionality of at least 2. The amount of component (a) relative to the total amount of (a), (b), (c) and (d) is preferably from 10 to 50 wt.%, more preferably from 12 to 45 wt.% and most preferably from 15 to 40 wt.%.

Examples of suitable organic polyisocyanates (component (a)) include ethylene diisocyanate, 1,6-hexamethylene diisocyanate (HDI), isophorone diisocyanate (IPDI), cyclohexane-1,4-diisocyanate, 4,4'-dicyclohexylmethane diisocyanate (4,4'-$H_{12}$ MDI), p-xylylene diisocyanate, p-tetramethylxylene diisocyanate (p-TMXDI) (and its meta isomer m-TMXDI), 1,4-phenylene diisocyanate, hydrogenated 2,4-toluene diisocyanate, hydrogenated 2,6-toluene diisocyanate, 4,4'-diphenylmethane diisocyanate (4,4'-MDI), polymethylene polyphenyl polyisocyanates, 2,4'-diphenylmethane diisocyanate, 3(4)-isocyanatomethyl-1-methyl cyclohexyl isocyanate (IMCI) and 1,5-naphthylene diisocyanate. Preferred organic poly isocyanates are IPDI and/or $H_{12}$MDI which provide improved low yellowing. Mixtures of organic difunctional isocyanates can be used. Conveniently component (a) comprises IPDI in an amount of at least 30 parts by weight, more conveniently ≥ 50 parts by weight, most conveniently ≥ 70 parts by weight, relative to the total weight of component (a).

Component (b)

Component (b) is at least one isocyanate-reactive compound containing ionic or potentially ionic water-dispersing groups and having a (number average) molecular weight of from 100 to 500 g/mol. The amount of component (b) relative to the total amount of (a), (b), (c) and (d) is preferably from 0 to 4 wt.%, preferably from 0.5 to 4 wt.%, preferably from 0.7 to 3 wt.% and even more preferably from 1 to 2 wt%. As used herein, potentially anionic dispersing group means a group which under the relevant conditions can be converted into an anionic group by salt formation (i.e.deprotonating the group by a base).

Component (b) comprises any suitable polyol, preferably diol, containing ionic or potentially ionic water-dispersing groups. Preferred ionic water-dispersing groups are anionic water-dispersing groups. Preferred anionic water-dispersing groups are carboxylic, phosphoric and/or sulphonic acid groups. Examples of such compounds include carboxyl containing diols, for example dihydroxy alkanoic acids such as 2,2-dimethylol propionic acid (DMPA) or 2,2-dimethylolbutanoic acid (DMBA). Alternatively sulfonate groups may be used as potentially anionic water-dispersing groups. The anionic water-dispersing groups are preferably fully or partially in the form of a salt. Conversion to the salt form is optionally effected by neutralisation of the polyurethane prepolymer with a base, preferably during the preparation of the polyurethane prepolymer and/or during the preparation of the aqueous composition of the present invention. If the anionic water-dispersing groups are neutralised, the base used to neutralise the groups is preferably ammonia, an amine or an inorganic base. Suitable amines include tertiary amines, for example triethylamine or N,N-dimethylethanolamine. Suitable inorganic bases include alkali hydroxides and carbonates, for example lithium hydroxide, sodium hydroxide, or potassium hydroxide. A quaternary ammonium hydroxide, for example $N^+(CH_3)_4(OH)$, can also be used. Generally a base is used which gives counter ions that may be desired for the composition. For example, preferred counter ions include Li+, $Na^+$, $K^+$, $NH_4^+$ and substituted ammonium salts. Cationic water dispersible groups can also be used, but are less preferred. Examples include pyridine groups, imidazole groups and/or quaternary ammonium groups which may be neutralised or permanently ionised (for example with dimethylsulphate). A very suitable component (b) is dimethylol propionic acid (DMPA).

The neutralising agent is preferably used in such an amount that the molar ratio of the ionic and potentially ionic water dispersing groups to the neutralizing groups of the neutralising agent are in the range of from 0.2 to 3.0, more preferably from 0.3 to 1.5 and even more preferably from 0.4 to 0.95.

Component (c)

Component (c) is at least one isocyanate reactive polyol other then (b) preferably having a (number average) molecular weight from 500 to 5000 g/mol. Component (c) is preferably a diol. As used herein, the number average molecular weight of a polyol is determined by multiplying the equivalent weight of the polyol with the OH functionality of the polyol (the OH functionality of the polyol is given by the supplier; in case the polyol is a diol, the OH functionality is 2). The equivalent weight of the polyol is calculated by dividing 56100 by the OH number of the polyol. The OH number of the polyol is measured by titration a known mass of polyol according to ASTM D4274 and is expressed as mg KOH/g.

The amount of polyol preferably having a number average molecular weight from 500 to 5000 g/mol (component (c)) relative to the total amount of (a), (b), (c) and (d) is from 35 to 85 wt.%, preferably from 40 to 79 wt.% and even more preferably from 45 to 75 wt.% The polyol is preferably selected from the group consisting of polybutadiene polyols, polyisoprene polyols, hydrogenated polybutadiene polyols, hydrogenated polyisoprene polyols, polyether diols, polyester polyols from dimer diacids, polyester polyols from dimer diols, dimer diols, and any mixture of at least two of the listed polyols.

The glass transition temperature $T_g$ of the component (c) is preferably from -110°C to +110°C, more preferably from -100°C to +40°C and most preferably from -100°C and -35°C. As used herein, the glass transition temperature is determined using differential scanning calorimetry DSC according to the method as described in the international standard ISO 11357-2 (Plastics - Differential scanning calorimetry (DSC) - Part 2: Determination of glass transition temperature) taking the midpoint temperature as $T_g$ using a DSC Q1000 or Q2000 from TA Instruments.

Most preferred polyols (c) are polyester diols, polycarbonate diols and polyether diols. Preferred polyether diol is polytetrahydrofuran (also known as polyTHF, pTHF, polytetramethylene ether glycol (PTMEG)). Commercial available pTHF (e.g. from BASF) under the trade designations pTHF650, pTHF1000 and/or pTHF2000.

It has been found that where even faster drying is required and/or additional demands are in place to deliver an even better level of chemical resistances (in particular water resistance), the use of a more hydrophobic polyol showed benefits. From a drying perspective, it is desired to have a compound (A2) to water weight ratio of preferably at least 50:50, preferably at least 70:30, more preferably at least 75:25 in the preparation of the polymeric particles B1. We have found that the preparation of dispersed polymeric particles in such a carrier fluid can be advantageously done by the use of hydrophobic polyols. Therefore, preparing the polymeric particles (B1) as described above is preferably done with the additional requirement that at least 5 wt.%, more preferably at least 10 wt.%, even more preferably at least 15 wt.%, even more preferably at least 25 wt.%, even more preferably at least 55 wt.% and most preferably at least 75 wt.% of component (c) (amount given based on total weight of component (c)) is insoluble in water and compound (A2) at standard conditions, when the weight ratio of compound (A2) to water is at least 50:50, preferably at least 70:30, more preferably at least 75:25. Certain polyols may require heating to melt to determine whether they are insoluble using this characterization method. The weight % of component (c) insoluble in water and compound (A2) at standard conditions is determined by determining the weight % of component (c) soluble in water and compound (A2) at standard conditions. The weight % of component (c) soluble in water and compound (A2) at standard conditions is determined by placing two mL of the water and compound (A2) composition over 100 mg of component (c) and the mixture is stored for 18 hrs. The insoluble portion is removed via centrifugation using a tabletop Silverline MiniStar centrifuge (2000RCF). The amount of dissolved component (c) in the solution is determined gravimetrically after evaporation of the solvent at 130°C for 30 minutes. This gives the mass of the dissolved component (c). The remaining mass is considered to be the insoluble component (c). The compound (A2) used in this characterization method should be the same compound (A2) used to prepare the dispersed polymeric particles (B1). As used herein, unless the context indicates otherwise, standard conditions means 23°C and atmospheric pressure. Specific constituents used in preparation of these diols are believed to be the Priplast polyols from Croda like PRIPLAST 3192--dimer acid, adipic acid, and 1, 6-hexane diol; for PRIPLAST 3193--dimer acid and ethylene glycol; for PRIPLAST 3194--dimer acid, adipic acid, and ethylene glycol; for PRIPLAST 3196--dimer acid and 1,6-hexane diol; for PRIPLAST 3197--dimer acid and dimer diol; for PRIPLAST 1906--isophthalic acid and dimer diol; and for PRIPLAST 1907--terephthalic acid and dimer diol. Other suitable polyols which are useful with respect to being insoluble in the compound (A2)/water mixtures as described above are hydroxy terminated polyalkadienes including polybutadienes and polyisoprenes, like for instance Krasol HLBH-P3000.

## Component (d)

Component (d) is at least one active-hydrogen chain extending compound with a functionality of at least 2 (other than water). The amount of component (d) (relative to the total amount of (a), (b), (c) and (d)) is preferably from 0 to 10 wt.%, more preferably from 0.25 to 7 wt.% and more preferably from 0.5 to 5 wt.%.

Active hydrogen-containing chain extenders (component (d)) which may be reacted with an isocyanate-terminated polyurethane prepolymer include amino-alcohols, primary or secondary diamines or polyamines, hydrazine, and substituted hydrazines.

Examples of suitable active hydrogen-containing chain extenders with functionality 2 include alkylene diamines such as ethylene diamine and cyclic amines such as isophorone diamine. Also materials such as hydrazine, substituted hydrazines such as, for example, dimethyl hydrazine, 1,6-hexamethylene-bis-hydrazine, carbodihydrazine, hydrazides of dicarboxylic acids such as adipic acid mono- or dihydrazide, oxalic acid dihydrazide, isophthalic acid dihydrazide, bis-semi-carbazide, and bis-hydrazide carbonic esters of glycols may be useful. Water-soluble active hydrogen chain extenders are preferred. Water itself may be used as an indirect chain extender because it will slowly convert some of the terminal isocyanate groups of the prepolymer to amino groups (via unstable carbamic acid groups) and the modified prepolymer molecules will then undergo chain extension. However, this is very slow compared to chain extension using the active- hydrogen chain extenders.

Preferably the active-hydrogen chain extending compound with functionality 2 is selected from the group comprising, amino-alcohols, primary or secondary diamines, hydrazine, substituted hydrazines and substituted hydrazides.

The chain extension may be conducted at convenient temperatures from about 5 °C to 95 °C or, more preferably, from about 10 °C to 60 °C.

The total amount of active-hydrogen chain extending compound employed, if used, (apart from water) should be such that the ratio of active hydrogens in the chain extender to isocyanate groups in the polyurethane prepolymer preferably is in the range from 0.1:1 to 2:1, more preferably from 0.6:1 to 1.4:1 more preferably from 0.7:1 to 1.1:1 and especially preferred 0.8:1 to 0.98:1.

## Component (e1)

Component (e1) is preferably selected from the group consisting of hexamethylene diisocyanate isocyanurate, hexamethylene diisocyanate biuret, isophorone diisocyanate isocyanurate and any mixture of at least two of the listed components. The amount of component (e1) is preferably from 5 to 50 wt.%, more preferably from 15 to 45 wt. %, even more preferably from 20 to 40 wt.% of component (a). Thus, the amount of (e1) is included in the amount of (a).

## Component (e2)

Component (e2) is at least one polyol having a (number average) molecular weight from 500 to 5000 g/mol and an average functionality of at least 2.3, more preferably at least 2.6, most preferably at least 2.9.

The amount of component (e2) is preferably from 1 to 40 wt.%, more preferably from 2 to 10 wt% of component (c). Thus, the amount of (e2) is included in the amount of (c). Usefully the organic polyol has an average OH functionality of from 2.3 to 4.5, more usefully from 2.5 to 3.5.

The glass transition temperature $T_g$ of the component (e2) preferably is from -110°C to +110°C, more preferably from -100°C to +40°C and most preferably from -100°C and -35°C. As used herein, the glass transition temperature is determined using differential scanning calorimetry DSC according to the method as described in the international standard ISO 11357-2 (Plastics - Differential scanning calorimetry (DSC) - Part 2: Determination of glass transition temperature) taking the midpoint temperature as $T_g$ using a DSC Q1000 or Q2000 from TA Instruments.

In one embodiment of the present invention it is strongly preferred that component (e2) comprises at least 80% (more preferably at least 90%, even more preferably at least 95%, most preferably at least 98%, for example 100%) by weight of organic triol. The polyol may be a polyester polyol, a polyesteramide polyol, a polyether polyol, a polythioether polyol, a polycarbonate polyol, a polyacetal polyol, a polyvinyl polyol and/or a polysiloxane polyol. Component (e2) is preferably selected from the group consisting of polyether polyols and/or polysiloxane polyol.

Component (e3)

Component (e3) is at least one polyol having a molecular weight of from 90 to 499 g/mol, preferably from 120 to 400 g/mol, more preferably from 125 to 350 g/mol and a functionality higher than 2. The amount of component (e3) is preferably from 1 to 10 wt%, more preferably from 1.5 to 7 wt%, most preferably from 2 to 5 wt% of component (c). Thus, the amount of (e3) is included in the amount of (c). Typical examples include glycerol, trimethylol propane, pentaerythritol and its corresponding dimers and alkoxylated derivatives.

Component (e4)

Component (e4) is at least one active-hydrogen chain extending compound with a functionality of 3 or higher. The amount of component (e4) is preferably at least 20wt.%, more preferably at least 35 wt%, more preferably at least 50wt%, especially preferred at least 70wt% of component (d). Thus, the amount of (e4) is included in the amount of (d).

In one embodiment of the present invention it is strongly preferred that component (e4) comprises at least 80% (more preferably at least 90%, even more preferably at least 95%, most preferably at least 98%, for example 100%) by weight of organic triamine. Component (e4) is preferably selected from the group consisting of diethylene triamine, triethylene tetraamine, 4-amino-1,8-octanediamine and any mixture of at least two of these components.

In a special embodiment, preferably the ionic groups are incorporated in the higher molecular weight polyol (c), in which case the polyurethane of the polymeric particles (B1) is obtained by the reaction of at least the following components:

(a) from 10 to 50 wt.%, preferably from 12 to 45 wt.% more preferably from 15 to 35wt% of at least one organic polyisocyanate with a functionality of at least 2;
(c) from 35 to 85 wt.%, preferably from 40 to 79 wt.% and even more preferably from 45 to 75 wt.% of at least one isocyanate-reactive polyol preferably having a molecular weight from 500 to 5000, bearing an ionic or potentially ionic group with typical examples but not limited to carboxylic, sulfonate or sulfonic, or phosphate groups. The acid value of these polyols range from 5 to 130 mg KOH/g, more preferably from 7 to 95 mg KOH/g, most preferably from 10 to 50 mg KOH/g;
(d) from 0 to 10 wt.%, preferably from 0.25 to 7 wt.% and more preferably from 0.5 to 5 wt.% of at least one active-hydrogen chain extending compound with a functionality of at least 2 (other than water),
where the amounts of (a), (c) and (d) are given relative to the total amount of (a), (c) and (d).

In a preferred embodiment of the present invention, the dispersion further comprises (B2) polymer(s) other than the polymer of (B1), whereby the weight ratio of the polymeric particles (B1) to the other polymer(s) (B2) is from preferably 95:5 to 5:95, more preferably from 90:10 to 25:75 and even more preferably from 80:20 to 35:65. In this embodiment, the dispersion according to the present invention comprises polymer(s) (B), in an amount from 5 to 65 wt.%, the polymer(s) (B) comprising polymeric particles (B1) as described above and polymer(s) (B2) other than the polymer of (B1). It has surprisingly been found that the presence of other polymer(s) (B2) results in improved printability (in particular transfer property) of the coating composition. Transfer is for example of great importance in the process of printing since the ink needs to be transferred from an anilox (an engraved cylinder) to a rubber roller, which prints the ink onto a substrate. The transfer is a measure for the amount of ink that is transferred onto the substrate. It has furthermore surprisingly been found that the presence of polymer(s) (B2) as defined herein in the dispersions according to the invention allows to obtain coatings with improved transparency and/or increased color intensity of the images/substrate beneath the coating. Transparency is an important feature in the coatings and graphic arts industry, especially in the case of clear coatings on wooden substrates, as well as overprint varnishes such as used in printing and packaging applications. In many cases it is also highly desired to provide matted transparent coatings which also enhance the aesthetic appearance of the underlying substrate. This is often referred to as color strength or color pop, which is the effect that under many lighting conditions it is observed that a clear matted top coat causes the perceived color intensity to increase. Commonly the optical transparency is determined by human assessment after applying a coating over a substrate. Normally, black substrates (such as Leneta test charts) are used for this. Another method to determine the transparency is via the BYK Hazegard plus, which is a device to determine transparency, haze and clarity. In the embodiment where polymer(s) (B2) are present in the dispersion, the amount of water (A1) relative to the carrier fluid (A) is preferably less than 30 wt.%, more preferably less than 20 wt.%, more preferably less than 15 wt.%, more preferably less than 10 wt.% and most preferred less than 5 wt.%.

The second polymer (B2)) that may be present in the dispersion of the present invention is different from the first polymer (B1) in at least one key aspect. The chemical composition of the second polymer (B2) can be the same or different than the chemical composition of the first polymer (B1); however, the second polymer (B2) is different from the first polymer (B1) in one key aspect in that at least 80% of the mass of the second polymer (B2) should pass through a 450nm filter. In a preferred embodiment, at least 80% of the mass of the second polymer (B2) must pass through a 200nm filter, and in a more preferred embodiment at least 80% of the mass of the second polymer (B2) must pass through a 500kDa ultrafiltration filter. The amount of polymer passing through this filter can be assessed by doing solids content determination of the filtrate and the pre-filtrate. This test is performed on the polymer B2 provided in the carrier fluid of the invention containing water and at least one of (A2). The weight average molecular weight of the second polymer (B2) is preferably from 5kDa to 600kDa, more preferably from 5kDa to 400kDa, more preferably from 10kDa to 200kDa, more preferably from 15kDa to 100kDa and most preferably from 30 kDaltons to 90 kDaltons. The weight average molecular weight of the second polymer (B2) is determined according to the measurement method in n-methyl pyrrolidone containing LiBr and hexafluoroisopropanol as described above, whereby 5 milligrams of solid (B2) is mixed with 1.5 milliliters of n-methyl pyrrolidone containing 10 mM LiBr and 8 volume percent hexafluoroisopropanol. It is desired, though not required that the second polymer (B2) is soluble in the carrier fluid used for the invention. The degree of solubility can be judged by doing static light scattering of the second polymer in the carrier fluid. The polymer(s) (B2) are preferably selected from the group consisting of polyamides, nitrocellulose, polyacrylates, polyurethanes, polyesters, polyvinylbutyral, polyvinyl pyrrolidone, cellulose acetate butyrate, hydroxyl propyl cellulose, hydroxyl ethyl cellulose, cellulose acetate propionate, and any mixture of at least two of these polymers. More preferably, the polymer(s) (B2) are selected from the group consisting of polyamides, polyether based polyurethanes, polyacrylates and any mixture of at least two of these polymers. Most preferably, the polymer(s) (B2) is (are) polyurethane(s) comprising polyols selected from polypropylene glycols with a molecular weight from 500 to 5000 and containing at least 30 wt.%, more preferably at least 50 wt.%, most preferably at least 65 wt.% of polypropylene glycol based on total weight of the polyurethane.

The dispersion of the present invention can be obtained by several embodiments. Preferably, the process comprises at least the following steps:

(i) preparing a dispersion of polymeric particles (B1) in liquid medium comprising water and at least one compound selected from the group consisting of ethanol, 1-propanol, 2-propanol, ethyl acetate, n-propyl acetate, isopropyl acetate, acetone, methyl ethyl ketone and any mixture of at least two of these compounds, whereby the amount of water relative to the amount of polymeric particles (B1) is preferably less than 1.5:1, more preferably less than 1:1, more preferably less than 1:2 and even more preferably less than 1:5,
(ii) optionally removing a part of the water present in the dispersion obtained in step (i), and
(iii) optionally adding at least one compound selected from the group consisting of ethanol, 1-propanol, 2-propanol, ethyl acetate, n-propyl acetate, isopropyl acetate, acetone, methyl ethyl ketone and any mixture of at least two of these compounds to the dispersion of polymeric particles (B1) obtained in step (i) or (ii).

In the embodiment of the invention where the dispersion also comprises polymer(s) (B2), the process to prepare the dispersion according to the invention preferably further comprises at least the following steps:

(iv) obtaining a mixture of polymer (B2) and at least one compound selected from the group consisting of ethanol, 1-propanol, 2-propanol, ethyl acetate, n-propyl acetate, isopropyl acetate, acetone, methyl ethyl ketone and any mixture of at least two of these compounds,
(v) mixing the dispersion obtained in step (i), (ii) or (iii) with the mixture obtained in step (iv) and optionally further adding at least one compound selected from the group consisting of ethanol, 1-propanol, 2-propanol, ethyl acetate, n-propyl acetate, isopropyl acetate, acetone, methyl ethyl ketone and any mixture of at least two of these compounds.

In one embodiment, the polymeric particles (B1) are prepared in a mixture of water and at least one compound selected from the group consisting of ethanol, 1-propanol, 2-propanol, ethyl acetate, n-propyl acetate, isopropyl acetate, acetone, methyl ethyl ketone and any mixture of at least two of these compounds. In a more specific embodiment, the polymeric particles (B1) are prepared in a mixture of ethanol and water. In another embodiment, the polymeric particles (B1) are prepared as an aqueous dispersion. Ways to prepare such particles are described in US 2009/0012226 and WO2008101661.

The present invention further relates to a coating composition comprising the dispersion as described above or obtained with the process as described above and optionally further comprising at least one of the following components: adhesion promotor, crosslinking agent, pigment particles, dissolved dye, wax, inorganic filler particle, rheology modifying agent, emulsifiers, defoamers, UV absorbers, and surfactants. The coating composition according to the invention comprises the dispersion as described above or obtained with the process as described above and preferably at least one of the following components:

a) An adhesion promoter, such as

i) titanium chelates,
ii) zirconium chelates.
iii) reactive silanes such as amino propyl trimethoxy silane, or aminoethylaminopropyltrimethoxysilane
iv) Polyethylene imines.

b) A crosslinking agent, such as

i) multi-functional epoxies,
ii) multi-functional carbodiimides such as crosslinker CX-300,
iii) multi-functional isocyanates,
iv) multi-functional amines such as polyethylene imine,
v) multi-functional aziridines such as crosslinker CX-100,
vi) melamine crosslinking agents,
vii) metal ion crosslinking agents such as Zn, Ca and Mg,
viii) silane or titanate crosslinking agents

c) A pigment particle, such as

i) Titanium dioxide particle
ii) An organic colorants particle such as PB15:4, or PR57:1, or PY14

d) A dissolved dye
e) A wax, such as

i) polyethylene, polypropylene, paraffin, PTFE

f) An inorganic filler particle, such as

i) silica
ii) talc
iii) clay
iv) calcium carbonate.

In a preferred embodiment the coating composition additionally contains adhesion promoters. Typical adhesion promoters for these coatings are reactive metal compounds such as titanium chelates or zirconium chelates. These products are sold under the name Tyzor, such as TyzorTE, or Tyzor LA. Additionally, reactive silanes such as amino propyl trimethoxy silane, or aminoethylaminopropyltrimethoxysilane can be used. Polyethylene imines can also be used. In a further embodiment the coating composition contains a crosslinking agent which can be added prior to coating. Suitable cross-linkers include multi-functional epoxies, multi-functional carbodiimides such as crosslinker CX-300, multi-functional isocyanates, multi-functional amines such as polyethylene imine, multi-functional aziridines such as crosslinker CX-100, melamine crosslinking agents, metal ion crosslinking agents such as Zn, Ca and Mg, and silane or titanate crosslinking agents. In preferred embodiment the composition of the polymers of this invention have reactive groups which can be effectively crosslinked with the crossslinkers. For example hydroxyl functionality on Polymer B1 or B2 could be crosslinked with multi-functional isocyanates, or carboxylic acid groups on the Polymer B1 or B2 could be crosslinked with crosslinker CX-300 as well as crosslinker CX-100. Carbonyl groups can also be built into the polymer which can be crosslinked with difunctional or multi-functional amines such as hexamethylene diamine or polyethylene imine can be used. In a preferred embodiment such coating composition can be formulated with free radical initiators and the coating composition can be cured using UV light.

The coating composition of the present invention preferably comprises carrier fluid in an amount of less than 80 wt.% of the total weight of the coating composition and the viscosity (measured on a Brookfield viscometer using a #2 spindle at 60RPM) of the coating composition is between 10mPas and 1000mPas, preferably between 20mPas and 500mPas, more preferably between 25mPas and 300mPas, and most preferably between 30mPas and 200mPas at a solid content of at least 15 wt%, more preferably at least 20 wt%, most preferred at least 25 wt%.

The present invention further relates to a process for preparing a coated substrate comprising (i) applying a coating composition as described above or obtained with the process to prepare the coating composition as described above to a substrate and (ii) drying the aqueous coating composition by evaporation of volatiles to obtain a coated substrate.

Preferred substrates are

a) plastic films such as polypropylene, polyethylene, polyester, polyamide, PVC, polycarbonate, polystyrene, polyurethane, PET, biaxially oriented polypropylene and biaxially oriented PET plastic films,
b) leather, artificial leather; natural and woven synthetic fabrics such as cotton, wool, rayon; non-woven fabrics,
c) metal substrates like aluminum and vacuum metalized plastic substrates,
d) film substrates which are pretreated by corona discharge or have been chemical pretreated with a primer or a coextruded polymer layer designed to improve adhesion,
e) paper,
f) cardboard,
g) a combination of a), b), c), d), e) and/or f).

The present invention further relates to a coated substrate obtained by coating a coating composition as described above to a substrate, preferably a plastic, paper or metal substrate (or a substrate of a combination of any of plastic, paper and metal), and whereby the coated substrate is used as a packaging material advantageously to be used for consumer products. The coating then preferably has a dry film thickness of 1.0 $\mu$m to 5 $\mu$m.

In a preferred embodiment, the coating composition of the invention is applied to a plastic film which then is laminated in a second step to another substrate. Such a preferred embodiment is described in EP2399741B1. This lamination can be done using adhesive lamination where a liquid adhesive is applied between the coated film and the substrate, or via a hot melt process where heat is used to melt an adhesive polymer which is applied to one of substrates to produce the adhesion between the two materials. Alternative the coating composition of this invention could be applied to film which can be directly laminated to a second substrate for instance via thermal lamination.

The coating composition is preferably applied to a substrate using any of the following techniques (or a combination thereof):

a. roll coating using patterned rolls, used in for example

i. flexographic printing
ii. gravure printing

b. roll coating using non patterned rolls, used in for example

i. direct roll coating
ii. reverse roll coating

c. spray coating,
d. dip coating,
e. knife coating,
f. brush applicators,
g. ink jet, and
h. screen printing.

A preferred method of applying the coating compositions of the invention is by printing or roll coating techniques. Typical techniques for this preferred application method include patterned roll coating techniques such as flexographic printing, gravure printing. Non patterned rolls can also be used, in direct and reverse roll coating, such as reverse gravure printing. Another preferred method of applying the coating composition of the invention is via screen printing. It may also be desirable to print an ink on top of this coating in a subsequent step.

The coating composition of this invention can be used for obtaining a traditional coating and is preferably used as an ink or overprint varnish. The present invention therefore further relates to an ink comprising a coating composition as described above or obtained with the process to prepare the coating composition as described above and a colorant. The present invention further relates a process for printing an image on a substrate comprising applying such an ink. The coating composition of this invention can for example be formulated into opaque inks using TiO2, or into colored inks using a variety of organic inorganic colorants or predispersed colorant pastes.

The present invention also relates to an overprint varnish coating composition as described above or obtained with the process to prepare the coating composition as described above.

The present invention is further illustrated with the following examples and comparative experiments. Unless otherwise specified, all parts, percentages, and ratios are on a weight basis.

Abbreviations & materials used

PPG2000 = polypropyleneglycol with a number average molecular weight of 2000
pTHF2000 = polytetrahydrofuran with a number average molecular weight of 2000
DMPA = dimethylol propionic acid
IPDI = isophorone diisocyanate
Desmodur N3300 = hexamethylene diisocyanate isocyanurate, available from Bayer MMA = methylmethacrylate
DETA = diethylene triamine
SA = stoechiometric amounts

NeoRez R-1010 is a low gloss polyurethane dispersion with a volume average particle size > 1 micrometer and a solids content of 32%, obtained from DSM Coating Resins. Ethanol, denatured with 10 ppm denatonium benzoate (bitrex).
Picassian PU-551: a film forming, semi-aliphatic, polyether modified polyurethane resin, diluted in a mixture of ethanol and ethylacetate, obtained from Stahl. Solids content is 58%.
PVP 360 is a polyvinylpyrrolidone with a weight average molecular weight of 360kDa, obtained from Aldrich.
Joncryl FLX5200 is an aliphatic polyurethane dispersion with a solids content of 40%, obtained from BASF with volume average particle size of 0.1 micrometer.
Priplast 3192 is a diol obtained from Croda.

Methods:

Viscosity measurement

Shear viscosities of the samples have been determined on a TA-Instruments Discovery Hybrid 2 rheometer using plate-plate geometry. Plate stainless steel, diameter 2 cm. Applied gap 500 micrometer. Measurement temperature 23°C. Applied sample volume about 0.5 ml. Viscosity was measured at a shear rate of 10 1/s.

Solids content measurement

Mettler Toledo HR83 Halogen Moister analyser with a drying temperature of 130°C

Gloss

BYK Gardner micro-TRI-gloss 20-60-85 glossmeter in accordance with ASTM D523-89.

Anti-blocking

The coated surface is cut into pieces of 50 × 150 mm and folded so that both lacquer against lacquer (l/l) and lacquer against backside (l/b) is tested. The folded substrate is put in a so-called block tester and the pressure is set at 1 kg/m2. The block tester is put in an oven at 50°C for 16 hours. Alternatively, the test can be done at 23°C and the duration of the test can be varied to for example 3 days. After this treatment, the test specimen is taken out of the block tester and conditioned at room temperature for one hour. The blocking is determined by pulling the two test specimen apart by hand. The degree of blocking is determined on the basis of the easiness of pulling the two test specimens apart. It is also very important that the coating is not impaired or damaged. 1 = severely impaired, 2 = impaired, 3 = minor impairment, 4 = hardly impaired, 5 = no impairment.

Transfer/printability

The printability is tested by using a K-control coater type K-101 with anilox application device (RK Print UK); the anilox engraved cylinder with 140 lines per inch and depth 10 µl (engraved on side as 140/10). Two or three droplets of the binder is added between the rubber role and the anilox cylinder and the control coater is used to apply a thin layer with preferable high speed on the chosen substrate. The applied film is dried in an oven with ventilation set at 80 °C. The dry layer is judged on levelling, wetting behaviour and transfer (the amount of material that is transferred onto the substrate) and scored from 1 (bad) to 5 (good).

Transparency

The optical transparency was determined by human assessment after applying a coating over a Leneta test chart (black substrate) and scored from 1 (bad) to 5 (good).

Heat resistance

This test determines the temperature resistance of a coating against heated sealing jaws, used in the packaging industry.
The tested systems are applied with a wire rod as a 12 microns wet layer on a Leneta 2C test chart, dried for 10 seconds at 80°C and subsequently conditioned at room temperature for at least 16 hours. The test is done with a Heat sealer from Brugger, type HSG/ETK. The temperature is set at 60°C; the pressure is set at 150N/15 cm$^2$; time is set at 1 second. A small sheet of flexible aluminum foil is placed around the test substrate to avoid the heated jaws to be in direct contact with the substrate. After the test, the tested sample is evaluated for damage with a score between 0 and 5 (5 = no damage, 0 = severely damaged)

Examples

Example 1

A 1000 cm3 flask equipped with a thermometer and overhead stirrer was charged with 104.2 g of pTHF2000 (OH-value = 55 mg KOH/g), 201.1 g of Priplast 3192 (OH-value = 56 mg KOH/g), 6.8 g of DMPA, 90.0 g IPDI and 0.06 g of Zinc neodecanoate. This mixture was heated to 70°C and the reaction was allowed to exotherm to 95° C. After the exotherm was complete the reaction was kept at 95° C for 2 hours. Subsequently, the prepolymer is cooled to 80°C and 47.8 g of Desmodur N3300 is added. The isocyanate content of the prepolymer was 5.26% (theoretical 6.09%). 3.6 g of triethylamine was added to the prepolymer to partially neutralise the acid groups and the mixture was homogenised with stirring.
A 1000 cm3 dispersion vessel with a thermometer and overhead stirrer was charged with 140.5 g of demineralised water, 141.4 g of ethanol, 1.4 g of Tego foamex 805, 9.54 g of polyurethane associative thickener and 6.4 g of non-ionic surfactant with HLB of 17.5, 320.9 g of the neutralised prepolymer was dispersed in the aqueous phase adjusting the stir rate to improve dispersing of the prepolymer if necessary, while maintaining the temperature of the aqueous phase below 27°C. After the given amount of prepolymer was dispersed, stirring was continued for 5 minutes after which 40.0 g of a 15.7% hydrazine solution was added to provide the chain extended polyurethane dispersion.
The resulting polyurethane dispersion had a solids content of 50.4 wt.%, a pH of 7.1 and a viscosity of 239 cps.

Comparative Example 1

A 2000 cm3 flask equipped with a thermometer and overhead stirrer was charged with 336.8 g of pTHF2000 (OH-value = 55 mg KOH/g), 645.0 g of Priplast 3192 (OH-value = 56 mg KOH/g), 22.1 g of DMPA, 291.0 g IPDI and 0.2 g of Zinc neodecanoate. This mixture was heated to 70°C and the reaction was allowed to exotherm to 95° C. After the exotherm was complete the reaction was kept at 95° C for 2 hours. Subsequently, the prepolymer is cooled to 80°C and the isocyanate content of the prepolymer was determined to be 4.16% (theoretical 4.23%). 11.7 g of triethylamine was added to the prepolymer to partially neutralise the acid groups and the mixture was homogenised with stirring.
A 1000 cm3 dispersion vessel with a thermometer and overhead stirrer was charged with 233.8 g of demineralised water, 234.2 g of ethanol, 0.9 g of Tego foamex 805, 6.17 g of polyurethane associative thickener and 4.1 g of non-ionic surfactant with HLB of 17.5, 207.5 g of the neutralised prepolymer was dispersed in the aqueous phase adjusting the stir rate to improve dispersing of the prepolymer if necessary, while maintaining the temperature of the aqueous phase below 27°C. After the given amount of prepolymer was dispersed, stirring was continued for 5 minutes after which 11.4 g of a 16.0% hydrazine solution and 1.9 g of monoethanolamine was added to provide the chain extended polyurethane dispersion. The particle size and the molecular weight of the dispersed polymeric particles are below the claimed ranges.

Comparative Example 2

A 2000 cm3 flask equipped with a thermometer and overhead stirrer was charged with 207.2 g of pTHF2000 (OH-value = 55 mg KOH/g), 400.0 g of Priplast 3192 (OH-value = 56 mg KOH/g), 13.6 g of DMPA, 179.1 g IPDI and 0.12 g of Zinc neodecanoate. This mixture was heated to 70°C and the reaction was allowed to exotherm to 95° C. After the exotherm was complete the reaction was kept at 95° C for 2 hours. Subsequently, the prepolymer is cooled to 80°C and the isocyanate content of the prepolymer was determined to be 3.86% (theoretical 4.23%). 7.18 g of triethylamine was added to the prepolymer to partially neutralise the acid groups and the mixture was homogenised with stirring.
A 1000 cm3 dispersion vessel with a thermometer and overhead stirrer was charged with 214.0 g of demineralised water, 235.2 g of ethanol, 0.9 g of Tego foamex 805, 6.05 g of polyurethane associative thickener and 4.0 g of non-ionic surfactant with HLB of 17.5, 203.3 g of the neutralised prepolymer was dispersed in the aqueous phase adjusting the stir rate to improve dispersing of the prepolymer if necessary, while maintaining the temperature of the aqueous phase below 27°C. After the given amount of prepolymer was dispersed, stirring was continued for 5 minutes after which 15.2 g of a 16.0% hydrazine solution and 0.6 g of monoethanolamine was added to provide the chain extended polyurethane dispersion. 100 g of this dispersion was mixed with 50 g of ethanol to result in the final product. In this comparative example the molecular weight of the dispersed polymeric particles B1 is below the claimed ranges.

Comparative Example 3

Example 1E of US6605666 was repeated. This comparative example is produced in a 75:25 isopropanol: water mixture. However, it has a particle size that is below our claimed ranges for polymer particle B1.

Example 2

Polyurethane dispersion NeoRez R-1010 was concentrated by using centrifugation in order to remove water from this dispersion.
The NeoRez R-1010 dispersion was first diluted with demineralised water in a ratio of 1:4, so the mixture has a solids content of 6.4 %. This is done to reduce the viscosity of the dispersion, which facilitates the purification of the large particles via centrifugation.
The diluted NeoRez R-1010 was centrifuged at 2000 rpm (3000 RCF) at 120 minutes in bench top centrifuge Hermle Z 513. The supernatant was decanted and the bottom phase that contains the micron sized particles demonstrated a solids content of approximately 50%.
125 grams of the concentrated NeoRez R-1010 dispersion prepared as described above was mixed with 125 grams of ethanol for 30 minutes. Solids content of the mixture was 25% and the viscosity was 4000 cps.
In Example 2 a part of the water that is used for the production of polymeric particles B1 is removed by a separate process step.
In Example 1 the polymeric particles B1 are prepared in a mixture of ethanol/water with a ratio of 43/57 and the amount of water relative to the carrier fluid and relative to the dispersion is within the claimed ranges. In Example 1 the water does not need to be removed in order to obtain an increased drying speed.

Example 3

86 grams of the concentrated NeoRez R-1010 dispersion prepared as described in Example 2 was mixed with 32 grams of Picassian PU-551 and 132 grams of ethanol for 30 minutes. Solids content of the mixture was 25% and the viscosity was 2111 cps.

Example 4

50 grams of the concentrated NeoRez R-1010 dispersion prepared as described in Example 2 was mixed with 11 grams of PVP360 and 139 grams of ethanol for 30 minutes. Solids content of the mixture was 18%. This example according to the invention contains a polymer B2 that is different than polymer B2 of example 3.

Comparative Example 4

108 grams of Picassian PU-551 was diluted with 108 grams of ethanol and 35 grams of demineralised water.

Solids content of the mixture was 25%, and the viscosity was 59 cps. The composition of Comparative Example 4 does not have polymeric particles (B1) as defined in the present invention.

Comparative Example 5

94 grams of ethanol was added to 156 grams of Joncryl FLX 5200 and this was mixed for 30 minutes. Solids content of the mixture was 25% and the viscosity was 36 cps. This comparative example contains polyurethane particles dispersed in water, but the volume average particles size is outside the claimed range from $1\mu m$ to $20\mu m$.

The compositions of all the examples were applied as a coating with a wire rod on a test chart with a wet layer thickness of 12 micrometer and dried in an oven at 80°C. The coated test charts were evaluated on several properties. The results are given in Table 3 and 4.

Table 3

| | Example 1 | Comparative Example 1 | Comparative Example 2 | Comparative Example 3 |
|---|---|---|---|---|
| **Dispersed polymeric particles B1** | | | | |
| Particle size (vol average) $\mu$m | 5 | 0.1 | 2.78 | 0.4 |
| D(0,1) um | 2.1 | | 1.49 | |
| D(0,5) um | 4.7 | NA | 2.56 | |
| D(0,9) um | 9.4 | | 4.37 | |
| $M_W$(kDa) | 498 | 28 | 30 | 210 |
| | | | | |
| **Carrier fluid** | 49.6 | 69.3 | 80 | 72 |
| Water A1 | 28.2 | 35.8 | 24.3 | 18 |
| Compound A2 | 21.4 | 33.5 | 55.7 | 54 |
| % of water A1 in carrier fluid | 57% | 52% | 30% | 25% |
| | | | | |
| **% insoluble fraction of the polymer in the dispersion** (NMP method as described in the description) | 77 | 0 | 0 | 27 |
| | | | | |
| **Application properties** | | | | |
| Gloss | | | | |
| 60° | 0.6 | 82 | 30 | 58 |
| 85° | 25 | 89 | 41 | 88 |
| Transfer (1-5) | | | | |
| Sticky film | no | yes | Yes | yes |
| Anti-blocking I/b, 3 days at 23°C | 4/5 | 1 | 0 | 1/2 |
| Anti-blocking I/b, 3 days at 50°C | 3 | 1 | | 1 |

Comparing Example 1 with Comparative Example 1 shows that when the dispersed polymeric particles have a lower molecular weight and particle size than claimed, a sticky film with high gloss and poor anti-blocking properties is obtained. Comparing Example 1 with Comparative Examples 1-3 shows that only with a dispersion according to the present invention, a non-sticky film with improved anti-blocking properties and low gloss is obtained. This demonstrates the need for both large particles within the claimed range to induce the right roughness profile in the dry coating, as well as particles with molecular weight within the claimed range in order to allow particles to be stable enough and maintain their size and shape during storage, formulation, application and drying of the coating.

Table 4

| | Example 2 | Example 3 | Comparative Example 4 | Comparative Example 5 | Example 4 |
|---|---|---|---|---|---|
| **Dispersed polymeric particles B1** | | | | | |
| Particle size (vol average) $\mu$m | 5.4 | 10 | NA | 100nm | 7 |
| D(0,1) um | 1.4 | 1.5 | NA | NA | 2.8 |
| D(0,5) um | 2.9 | 7.7 | NA | NA | |
| D(0,9) um | 13.7 | 23 | NA | NA | 12.6 |
| Mw (kDa) | 600 | 600 | NA | 600 | 600 |
| | | | | | |
| **Polymer B2** | | $M_W$ = 36.5 kDa | $M_W$ = 36.5 kDa | | Mw=569 kDa |
| **Calculated weight ratio B1 to B2** | 100:0 | 70:30 | 0:100 | 100:0 | 70:30 |
| **Carrier fluid** | 75 | 75 | 75 | 75 | 82 |
| Water A1 | 25.2 | 16.8 | 14 | 37.5 | 12.6 |
| Compound A2 | 49.8 | 58.2 | 61 | 37.5 | 69.4 |
| % of water A1 in carrier fluid | 34% | 22% | 19% | 50% | 15% |
| | | | | | |
| **% insoluble fraction of the polymer in the dispersion** (NMP method as described in the description) | 100 | 70 | 0 | 100 | 60 |
| | | | | | |
| **Application properties** | | | | | |
| Gloss | | | | | |
| 60° | 1.0 | 1.2 | 80 | 82 | 0.6 |
| 85° | 44 | 50 | 96 | 96 | 28 |
| Transfer (1-5) | 1/2 | 4/5 | 4 | 3 | 3 |
| Sticky film | no | no | yes | no | no |
| Transparency (1-5) | 1 | 3 | 5 | 5 | 4 |
| Blocking l/b, 16 hrs at 50°C | 4/5 | 4 | 1 | 1 | 4 |
| Heat resistance 60°C | 5 | 4/5 | 1 | 1 | 5 |

As shown by Examples 2-4, despite the high amount of alcohol in the dispersions according to the invention, the polymeric particles surprisingly does not dissolve at all or only in small amounts resulting in that the drying speed of the coating composition can be increased while at the same time acceptable viscosity and coatings with low gloss and good blocking resistance can be obtained.

Comparing Example 2 with Example 3 or 4 shows that the additional presence of a sufficient amount of polymer B2 results in an increase of the transfer properties, as well as the transparency of the final coating. Comparing Example 3 with Comparative Example 4 shows that when no dispersed polymeric particles B1 as claimed are present, but only polymer B2, high gloss is obtained, and for this specific example a sticky film and poor blocking resistance is obtained. In Example 3 and Comparative Example 4 the same polymer B2 is applied. Comparing Example 3 with Example 2 and Comparative Experiment 4 shows that the presence of a small amount of the same polymer B2 in addition to dispersed polymeric particles B1 as claimed (Example 3) surprisingly results in a coating with improved transfer property (compared to Example 2), while the gloss remains low and the anti-blocking properties are still good. Comparative example 5 shows that low gloss can only be obtained when the particle size of the particles is within the claimed range.

Example 5

A concentrated dispersion of NeoRez R-1010 prepared as described in Example 2 is diluted with ethanol, so that the weight % of polymeric particles is 25% based on the total weight of the composition containing particles, ethanol and water. The final ratios being 25% polymeric particles, 50% ethanol, and 25% water. A 100 um thick film of the liquid is coated on a Leneta test chart and placed on a balance in a 25C° and 50% relative humidity environment. The time for the solids to reach 60% is measured as 1150 seconds and the time for the solids to reach 70% is measured as 2089 seconds.

Comparative Example 6

NeoRez R-1010 is diluted with water, so that the weight % of polymeric particles is 25% based on the total weight of the composition containing particles, ethanol and water. The final ratios being 25% polymeric particles, 75% water. A 100 um thick film of the liquid is coated on a Leneta test chart and placed on a balance in a 25C° and 50% relative humidity environment. The time for the solids to reach 60% is measured as 1945 seconds and the time for the solids to reach 70% is measured as 3334 seconds.
The relative drying rate of example 5 is 1.6 times faster than for Comparative Example 6.

**Claims**

1. A dispersion comprising

    (A) a carrier fluid in an amount from 35 to 95 wt.%, the carrier fluid comprising:

        (A1) water, and
        (A2) at least one compound selected from the group consisting of ethanol, 1-propanol, 2-propanol, ethyl acetate, n-propyl acetate, isopropyl acetate, acetone, methyl ethyl ketone and any mixture of at least two of these compounds,
        whereby the amount of water (A1) relative to the carrier fluid (A) is less than 85 wt.% and the amount of water relative to the dispersion is from 1 to 30 wt.%; and

    (B) polymer(s) in an amount from 5 to 65 wt.%, the polymer(s) comprising:
    (B1) polymeric particles having a volume average particle size from $1\mu$m to $20\mu$m, whereby the polymer of the polymeric particles (B1) has a weight average molecular weight of at least 250 kDaltons, at least 50 wt.% of the polymeric particles (B1) are insoluble in n-methyl pyrrolidone containing 10 mM LiBr and 8 volume percent hexafluoroisopropanol, and the polymer of the polymeric particles (B1) is selected from the group consisting of polyurethane, polyurethane-polyacrylate hybrid and any mixture thereof; and
    whereby the amounts of (A) and (B) are given relative to the total amount of (A) and (B).

2. The dispersion according to claim 1, wherein the amount of water (A1) relative to the carrier fluid (A) is less than 60 wt.%, preferably less than 50 wt.%, more preferably less than 40 wt.% and most preferred less than 30 wt.%.

3. The dispersion according to any of the preceding claims, wherein compound (A2) comprises ethanol, 1-propanol, 2-propanol or a mixture of at least two of these compounds, preferably at least 20 wt.% of compound (A2) is ethanol, 1-propanol, 2-propanol or a mixture of at least two of these compounds, more preferably at least 50 wt.% of compound (A2) is ethanol, 1-propanol, 2-propanol or a mixture of at least two of these compounds, even more preferably at least 75 wt.% of compound (A2) is ethanol, 1-propanol, 2-propanol or a mixture of at least two of these compounds, even more preferably at least 90 wt.% of compound (A2) is ethanol, 1-propanol, 2-propanol or a mixture of at least two of these compounds.

4. The dispersion according to claim 1 or 2, wherein compound (A2) is selected from the group consisting of ethanol, 1-propanol, 2-propanol and any mixture of at least two of these compounds.

5. The dispersion according to claim 1 or 2, wherein compound (A2) consists of ethanol and ethyl acetate, whereby the amount of ethyl acetate is preferably at most 50 wt.% (relative to compound (A2)), more preferably at most 25 wt.%, even more preferably at most 10 wt.%, even more preferably at most 2 wt.% and most preferably 0 wt.%.

6. The dispersion according to any of the preceding claims, wherein the polymer of the polymeric particles (B1) has a weight average molecular weight of at least 350 kDaltons.

7. The dispersion according to any one of the preceding claims wherein the particle size (D[0.5]) of the polymeric particles (B1) is preferably greater than 1 micron, more preferably greater than 1.2 micron and especially preferred greater than 1.5 micron.

8. The dispersion according to any one of the preceding claims wherein the particle size (D[0.9]) of the polymeric particles (B1) is preferably less than 50 micron, more preferably less than 35 micron, more preferably less than 20 micron.

9. The dispersion according to any one of the preceding claims, wherein at least 70 wt.%, preferably at least 80 wt.%, most preferably at least 90 wt.% of the polymeric particles (B1) are insoluble in n-methyl pyrrolidone containing 10 mM LiBr and 8 volume percent hexafluoroisopropanol.

10. The dispersion according to any of the preceding claims, wherein the polymer of the polymeric particles (B1) is a polyurethane being the reaction product of at least the following components:

    (a) from 10 to 50 wt.%, preferably from 12 to 45 wt.% more preferably from 15 to 40 wt% of at least one organic polyisocyanate with a functionality of at least 2,
    (b) from 0 to 4 wt.%, preferably from 0.5 to 4 wt.%, 0.7 to 3 wt.% and even more preferably from 1 to 2 wt.% of an isocyanate-reactive compound containing ionic or potentially ionic water-dispersing groups preferably having a molecular weight of from 100 to 500 g/mol,
    (c) from 35 to 85 wt.%, preferably from 40 to 79 wt.% and even more preferably from 45 to 75 wt.% of at least one isocyanate-reactive polyol other than (b) preferably having a molecular weight from 500 to 5000,
    (d) from 0 to 10 wt.%, preferably from 0.25 to 7 wt.% and more preferably from 0.5 to 5 wt.% of at least one active-hydrogen chain extending compound with a functionality of at least 2 (other than water),
    where the amounts of (a), (b), (c) and (d) are given relative to the total amount of (a), (b), (c) and (d), and where the isocyanate and hydroxy groups on the components used to prepare the polyurethane are present in a respective mole ratio (NCO to OH) in the range of from 0.8:1 to 5:1, preferably from 1.2:1 to 4:1 and even more preferably from 1.5:1 to 3.5:1.

11. The dispersion according to any of the preceding claims, wherein the polymeric particles (B1) are crosslinked during preparation of the polymeric particles.

12. The dispersion according to claim 10 or 11, wherein the polymer of the polymeric particles (B1) is a polyurethane being the reaction product of at least the following components (a), (b), (c), (d) and at least one of the following branching components (e) with an average functionality above 2:

    (e1) from 5 to 50 wt.%, more preferably from 15 to 45 wt. %, even more preferably from 20 to 40 wt.% of component (a) comprising at least one organic polyisocyanate with an average functionality of > 2.3, more preferably > 2.5, and most preferred >2.9;
    (e2) from 1 to 40 wt.%, preferably from 1.5 to 20 wt.%, more preferably from 2 to 10 wt% of component (c) comprising at least one polyol having a molecular weight of from 500 to 5000 g/mol and an average functionality of at least 2.3, more preferably at least 2.6, most preferably at least 2.9, and preferably a glass transition temperature $T_g$ from -110°C to +110°C;
    (e3) from 1 to 10 wt%, preferably from 1.5 to 7 wt%, most preferably from 2 to 5 wt% of component (c) comprising a polyol having a molecular weight of from 90 to 499 g/mol, preferably from 120 to 400 g/mol, more preferably from 125 to 350 g/mol and a hydroxyl functionality higher than 2;
    (e4) at least 20wt.%, preferably at least 35 wt%, most preferably at least 50wt%, especially preferred at least 70wt% of component (d) comprising at least one active-hydrogen chain extending compound with a functionality of 3 or higher.

13. The dispersion according to any of claims 10-12, wherein at least 5 wt.%, preferably at least 25 wt.%, preferably at least 55 wt.% and most preferably at least 75 wt.% of component (c) (amount given based on total weight of component (c)) is insoluble in water and compound (A2) at standard conditions, when the weight ratio of compound (A2) to water is at least 50:50, preferably at least 75:25, whereby the compound (A2) used in this characterization method is the same compound (A2) used to prepare the dispersed polymeric particles.

14. The dispersion according to any of claims 1 to 13, wherein the dispersion further comprises (B2) polymer(s) other than (B1), whereby the weight ratio of the polymeric particles (B1) to the other polymer(s) (B2) is from 95:5 to 5:95, preferably from 90:10 to 25:75, more preferably from 80:20 to 35:65.

15. The dispersion according to claim 14, wherein the weight average molecular weight of the second polymer (B2) is from 5kDa to 600kDa, more preferably from 5kDa to 400kDa, more preferably from 10kDa to 200kDa, more preferably from 15kDa to 100kDa and most preferably from 30 kDaltons to 90 kDaltons.

16. The dispersion according to claim 14 or 15, wherein the amount of water (A1) relative to the carrier fluid (A) is less than 30 wt.%, preferably less than 20 wt.%, more preferably less than 15 wt.%, more preferably less than 10 wt.% and most preferred less than 5 wt.%.

17. The dispersion according to any of claims 14 to 16, wherein the polymer(s) (B2) are selected from the group consisting of polyamides, nitrocellulose, polyacrylates, polyurethanes, polyesters, polyvinylbutyral, polyvinyl pyrrolidone, hydroxyl propyl cellulose, hydroxyl ethyl cellulose, cellulose acetate butyrate, cellulose acetate propionate, and any mixture of at least two of these polymers.

18. The dispersion according to any of claims 14 to 16, wherein the polymer(s) (B2) are selected from the group consisting of polyamides, polyether based polyurethanes, polyacrylates and any mixture of at least two of these polymers.

19. The dispersion according to any of claims 14 to 16, wherein the polymer(s) (B2) is (are) polyurethane(s) comprising polyols selected from polypropylene glycols with a molecular weight from 500 to 5000 and containing at least 30 wt.%, more preferably at least 50 wt.%, most preferably at least 65 wt.% of polypropylene glycol based on total weight of the polyurethane.

20. The dispersion according to any one of the preceding claims, wherein the total amount of the carrier fluid (A) and the polymer(s) (B) relative to the dispersion is from 80 to 100 wt.%, more preferably from 92 to 100 wt.%.

21. The dispersion according to any one of the preceding claims, wherein the viscosity of the dispersion is from 20 mPas.s to 5000 mPa.s.

22. A process to prepare the dispersion of any of the preceding claims, wherein the process comprises the following steps:

(i) preparing a dispersion of polymeric particles (B1) in liquid medium comprising water and preferably at least one compound selected from the group consisting of ethanol, 1-propanol, 2-propanol, ethyl acetate, n-propyl acetate, isopropyl acetate, acetone, methyl ethyl ketone and any mixture of at least two of these compounds, whereby the amount of water relative to amount polymeric particles (B1) is preferably less than 1.5:1, more preferably less than 1:1, more preferably less than 1:2 and even more preferably less than 1:5,
(ii) optionally removing a part of the water present in the dispersion obtained in step (i), and
(iii) optionally adding at least one compound selected from the group consisting of ethanol, 1-propanol, 2-propanol, ethyl acetate, n-propyl acetate, isopropyl acetate, acetone, methyl ethyl ketone and any mixture of at least two of these compounds (A2) to the dispersion of polymeric particles (B1) obtained in step (i) or (ii).

23. The process according to claim 22 to prepare the dispersion of any of claims 14 to 19 or 20 to 21 (when dependent on claims 14 to 19), wherein the process further comprises

(iv) obtaining a mixture of polymer (B2) and at least one compound selected from the group consisting of ethanol, 1-propanol, 2-propanol, ethyl acetate, n-propyl acetate, isopropyl acetate, acetone, methyl ethyl ketone and any mixture of at least two of these compounds,
(v) mixing the dispersion obtained in step (i), (ii) or (iii) with the mixture obtained in step (iv) and optionally further adding at least one compound selected from the group consisting of ethanol, 1-propanol, 2-propanol, ethyl acetate, n-propyl acetate, isopropyl acetate, acetone, methyl ethyl ketone and any mixture of at least two of these compounds.

24. A coating composition comprising the dispersion according to any one of claims 1 to 21 or obtained with the process according to claim 22 to 23 and optionally further comprising at least one of the following components: adhesion promotor, crosslinking agent, pigment particle, dissolved dye, wax, inorganic filler particle, rheology modifying agent.

**25.** A process for preparing a coated substrate, wherein the process comprises (i) applying a coating composition according to claim 24 to a substrate, and (ii) drying the coating composition by evaporation of volatiles to obtain a coated substrate.

**26.** A process according to claim 25, wherein the substrate is selected from the group consisting of

a) plastic films such as polypropylene, polyethylene, polyester, polyamide, PVC, polycarbonate, polystyrene, polyurethane, PET, biaxially oriented polypropylene and biaxially oriented PET plastic films,
b) leather, artificial leather; natural and woven synthetic fabrics such as cotton, wool, rayon; non-woven fabrics,
c) metal substrates like aluminum and vacuum metalized plastic substrates,
d) film substrates which are pretreated by corona discharge or have been chemical pretreated with a primer or a coextruded polymer layer designed to improve adhesion,
e) paper,
f) cardboard, and
g) a combination of a), b), c), d), e) and/or f).

**27.** A process according to claim 25 or 26, wherein applying the coating composition is effected by printing or roll coating technique.

**28.** A process according to claim any of claims 25 to 27, wherein the coating has a dry thickness of from 0.5 to 150 $\mu$m, preferably from 0.5 to 50 $\mu$m, more preferably from 1 to 20 $\mu$m, even more preferably from 1 to 10 $\mu$m and even more preferably from 1 to 5 $\mu$m.

**29.** A process according to claim any of claims 25 to 28, wherein the coating is an overprint varnish.

**30.** An ink comprising a coating composition according to claim 24 and a colorant.

**31.** A process for printing an image on a substrate comprising applying an ink according to claim 30.

**Patentansprüche**

**1.** Dispersion, umfassend

(A) eine Trägerflüssigkeit in einer Menge von 35 bis 95 Gew.-%, wobei die Trägerflüssigkeit umfasst:

(A1) Wasser, und
(A2) mindestens eine Verbindung, die aus der Gruppe ausgewählt ist, die aus Ethanol, 1-Propanol, 2-Propanol, Ethylacetat, n-Propylacetat, Isopropylacetat, Aceton, Methylethylketon und jeder Mischung von mindestens zwei dieser Verbindungen besteht,
wobei die Menge an Wasser (A1) im Verhältnis zu der Trägerflüssigkeit (A) weniger als 85 Gew.-% und die Menge an Wasser im Verhältnis zu der Dispersion 1 bis 30 Gew.-% beträgt; und
(B) ein Polymer/Polymere in einer Menge von 5 bis 65 Gew.-%, wobei das/die Polymer(e) umfassen: (B1) polymere Teilchen, die eine volumengemittelte Teilchengröße von 1 $\mu$m bis 20 $\mu$m aufweisen, wobei das Polymer der polymeren Teilchen (B1) ein gewichtsmittleres Molekulargewicht von mindestens 250 kDalton aufweist, mindestens 50 Gew.-% der polymeren Teilchen (B1) in n-Methylpyrrolidin, das 10 mM LiBr und 8 Vol.-% Hexafluorisopropanol enthält, unlöslich sind und das Polymer der polymeren Teilchen (B1) aus der Gruppe ausgewählt ist, die aus Polyurethan, Polyurethan-Polyacrylat-Hybrid und einer beliebigen Mischung davon besteht; und
wobei die Mengen von (A) und (B) relativ zur Gesamtmenge von (A) und (B) angegeben sind.

**2.** Dispersion nach Anspruch 1, wobei die Menge an Wasser (A1) im Verhältnis zu der Trägerflüssigkeit (A) weniger als 60 Gew.-%, bevorzugt weniger als 50 Gew.-%, stärker bevorzugt weniger als 40 Gew.-% und am stärksten bevorzugt weniger als 30 Gew.-% beträgt.

**3.** Dispersion nach einem der vorhergehenden Ansprüche, wobei die Verbindung (A2) Ethanol, 1-Propanol, 2-Propanol oder ein Gemisch aus mindestens zwei dieser Verbindungen umfasst, bevorzugt mindestens 20 Gew.-% der Verbindung (A2) Ethanol, 1-Propanol, 2-Propanol oder ein Gemisch aus mindestens zwei dieser Verbindungen ist, stärker bevorzugt mindestens 50 Gew.-% der Verbindung (A2) Ethanol, 1-Propanol, 2-Propanol oder ein Gemisch aus mindestens zwei dieser Verbindungen ist, noch stärker bevorzugt mindestens 75 Gew.-% der Verbindung (A2) Ethanol, 1-Propanol, 2-Propanol oder ein Gemisch aus mindestens zwei dieser Verbindungen ist, noch stärker bevorzugt mindestens 90 Gew.-% der Verbindung (A2) Ethanol, 1-Propanol, 2-Propanol oder ein Gemisch aus mindestens zwei dieser Verbindungen ist.

4. Dispersion nach Anspruch 1 oder 2, wobei die Verbindung (A2) aus der Gruppe ausgewählt ist, die aus Ethanol, 1-Propanol, 2-Propanol und jeder Mischung von mindestens zwei dieser Verbindungen besteht.

5. Dispersion nach Anspruch 1 oder 2, wobei die Verbindung (A2) aus Ethanol und Ethylacetat besteht, wobei die Menge an Ethylacetat bevorzugt höchstens 50 Gew.-% (im Verhältnis zu der Verbindung (A2)), stärker bevorzugt höchstens 25 Gew.-%, noch stärker bevorzugt höchstens 10 Gew.-%, noch stärker bevorzugt höchstens 2 Gew.-% und am stärksten bevorzugt 0 Gew.-% beträgt.

6. Dispersion nach einem der vorhergehenden Ansprüche, wobei das Polymer der polymeren Teilchen (B1) ein gewichtsmittleres Molekulargewicht von mindestens 350 kDalton aufweist.

7. Dispersion nach einem der vorhergehenden Ansprüche, wobei die Teilchengröße (D[0,5]) der polymeren Teilchen (B1) bevorzugt größer als 1 Mikrometer, stärker bevorzugt größer als 1,2 Mikrometer und insbesondere stärker bevorzugt größer als 1,5 Mikrometer ist.

8. Dispersion nach einem der vorhergehenden Ansprüche, wobei die Teilchengröße (D[0,9]) der polymeren Teilchen (B1) bevorzugt weniger als 50 Mikrometer, stärker bevorzugt weniger als 35 Mikrometer, stärker bevorzugt weniger als 20 Mikrometer beträgt.

9. Dispersion nach einem der vorhergehenden Ansprüche, wobei mindestens 70 Gew.-%, bevorzugt mindestens 80 Gew.-%, am stärksten bevorzugt mindestens 90 Gew.-% der polymeren Teilchen (B1) in n-Methylpyrrolidon, das 10 mM LiBr und 8 Vol.-% Hexafluorisopropanol enthält, unlöslich sind.

10. Dispersion nach einem der vorhergehenden Ansprüche, wobei das Polymer der polymeren Teilchen (B1) ein Polyurethan ist, welches das Reaktionsprodukt von mindestens den folgenden Komponenten ist:

(a) 10 bis 50 Gew.-%, bevorzugt 12 bis 45 Gew.-%, stärker bevorzugt 15 bis 40 Gew.-%, mindestens eines organischen Polyisocyanats mit einer Funktionalität von mindestens 2,
(b) 0 bis 4 Gew.-%, bevorzugt 0,5 bis 4 Gew.-%, 0,7 bis 3 Gew.-% und noch stärker bevorzugt 1 bis 2 Gew.-% einer isocyanatreaktiven Verbindung, die ionische oder potentiell ionische wasserdispergierende Gruppen enthält, bevorzugt mit einem Molekulargewicht von 100 bis 500 g/mol,
(c) 35 bis 85 Gew.-%, bevorzugt 40 bis 79 Gew.-% und noch stärker bevorzugt 45 bis 75 Gew.-% mindestens eines von (b) verschiedenen isocyanatreaktiven Polyols, das bevorzugt ein Molekulargewicht von 500 bis 5000 aufweist,
(d) 0 bis 10 Gew.-%, bevorzugt 0,25 bis 7 Gew.-% und stärker bevorzugt 0,5 bis 5 Gew.-% mindestens einer Verbindung, die Ketten aus aktivem Wasserstoff verlängert, mit einer Funktionalität von mindestens 2 (außer Wasser), wobei die Mengen von (a), (b), (c) und (d) im Verhältnis zu der Gesamtmenge von (a), (b), (c) und (d) angegeben sind, und
wobei die Isocyanat- und Hydroxygruppen an den zum Herstellen des Polyurethans verwendeten Komponenten in einem jeweiligen Molverhältnis (NCO zu OH) im Bereich von 0,8 : 1 bis 5 : 1, bevorzugt von 1,2 : 1 bis 4 : 1 und stärker bevorzugt von 1,5 : 1 bis 3,5 : 1 vorliegen.

11. Dispersion nach einem der vorhergehenden Ansprüche, wobei die polymeren Teilchen (B1) während der Herstellung der polymeren Teilchen vernetzt werden.

12. Dispersion nach Anspruch 10 oder 11, wobei das Polymer der polymeren Teilchen (B1) ein Polyurethan ist, welches das Reaktionsprodukt von mindestens den folgenden Komponenten (a), (b), (c), (d) und mindestens einer der folgenden Verzweigungskomponenten (e) mit einer durchschnittlichen Funktionalität über 2 ist:

(e1) 5 bis 50 Gew.-%, stärker bevorzugt 15 bis 45 Gew.-%, noch stärker bevorzugt 20 bis 40 Gew.-% der Komponente (a), umfassend mindestens ein organisches Polyisocyanat mit einer durchschnittlichen Funktionalität von > 2,3, stärker bevorzugt > 2,5 und am stärksten bevorzugt > 2,9;

(e2) 1 bis 40 Gew.-%, bevorzugt 1,5 bis 20 Gew.-%, stärker bevorzugt 2 bis 10 Gew.-% der Komponente (c), umfassend mindestens ein Polyol, das ein Molekulargewicht von 500 bis 5000 g/mol und eine durchschnittliche Funktionalität von mindestens 2,3, stärker bevorzugt mindestens 2,6, am stärksten bevorzugt mindestens 2,9, und bevorzugt eine Glasübergangstemperatur $T_g$ von -110°C bis +110°C aufweist;

(e3) 1 bis 10 Gew.-%, bevorzugt 1,5 bis 7 Gew.-%, am stärksten bevorzugt 2 bis 5 Gew.-% der Komponente (c), umfassend ein Polyol, das ein Molekulargewicht von 90 bis 499 g/mol, bevorzugt von 120 bis 400 g/mol, stärker bevorzugt von 125 bis 350 g/mol und eine Hydroxylfunktionalität höher als 2 aufweist;

(e4) mindestens 20 Gew.-%, bevorzugt mindestens 35 Gew.-%, am stärksten bevorzugt mindestens 50 Gew.-%, insbesondere bevorzugt mindestens 70 Gew.-% der Komponente (d), umfassend mindestens eine Verbindung, die Ketten aus aktivem Wasserstoff verlängert, mit einer Funktionalität von 3 oder höher.

13. Dispersion nach einem der Ansprüche 10-12, wobei mindestens 5 Gew.-%, bevorzugt mindestens 25 Gew.-%, bevorzugt mindestens 55 Gew.-% und am stärksten bevorzugt mindestens 75 Gew.-% der Komponente (c) (Menge angegeben auf Basis des Gesamtgewichts der Komponente (c)) in Wasser und der Verbindung (A2) bei Standardbedingungen unlöslich ist, wenn das Gewichtsverhältnis der Verbindung (A2) zu Wasser mindestens 50 : 50, bevorzugt mindestens 75 : 25, beträgt, wobei die in diesem Charakterisierungsverfahren verwendete Verbindung (A2) dieselbe Verbindung (A2) ist, die zum Herstellen der dispergierten polymeren Teilchen verwendet wird.

14. Dispersion nach einem der Ansprüche 1 bis 13, wobei die Dispersion ferner (B2) ein oder mehrere von B(1) verschiedene Polymere umfasst, wobei das Gewichtsverhältnis der polymeren Teilchen (B1) zu dem oder den anderen Polymeren (B2) von 95 : 5 bis 5 : 95, bevorzugt von 90 : 10 bis 25 : 75, stärker bevorzugt von 80 : 20 bis 35 : 65 beträgt.

15. Dispersion nach Anspruch 14, wobei das gewichtsmittlere Molekulargewicht des zweiten Polymers (B2) 5 kDa bis 600 kDa, stärker bevorzugt 5 kDa bis 400 kDa, stärker bevorzugt 10 kDa bis 200 kDa, stärker bevorzugt 15 kDa bis 100 kDa und am stärksten bevorzugt 30 kDalton bis 90 kDalton beträgt.

16. Dispersion nach Anspruch 14 oder 15, wobei die Menge an Wasser (A1), im Verhältnis zu der Trägerflüssigkeit (A), weniger als 30 Gew.-%, bevorzugt weniger als 20 Gew.-%, stärker bevorzugt weniger als 15 Gew.-%, stärker bevorzugt weniger als 10 Gew.-% und am stärksten bevorzugt weniger als 5 Gew.-% beträgt.

17. Dispersion nach einem der Ansprüche 14 bis 16, wobei das/die Polymer(e) (B2) aus der Gruppe ausgewählt ist/sind, die aus Polyamiden, Nitrocellulose, Polyacrylaten, Polyurethanen, Polyestern, Polyvinylbutyral, Polyvinylpyrrolidon, Hydroxylpropylcellulose, Hydroxylethylcellulose, Celluloseacetatbutyrat, Celluloseacetatpropionat und jeder Mischung aus mindestens zwei dieser Polymere besteht.

18. Dispersion nach einem der Ansprüche 14 bis 16, wobei das/die Polymer(e) (B2) aus der Gruppe ausgewählt sind, die aus Polyamiden, Polyurethanen auf Polyetherbasis, Polyacrylaten und jeder Mischung aus mindestens zwei dieser Polymere besteht.

19. Dispersion nach einem der Ansprüche 14 bis 16, wobei das/die Polymer(e) (B2) Polyurethan(e) ist/sind, das/die Polyole umfasst/umfassen, die aus Polypropylenglykolen mit einem Molekulargewicht von 500 bis 5000 ausgewählt sind und mindestens 30 Gew.-%, stärker bevorzugt mindestens 50 Gew.-%, am stärksten bevorzugt mindestens 65 Gew.-% Polypropylenglykol, bezogen auf das Gesamtgewicht des Polyurethans, enthalten.

20. Dispersion nach einem der vorhergehenden Ansprüche, wobei die Gesamtmenge der Trägerflüssigkeit (A) und des/der Polymers/Polymere (B) im Verhältnis zu der Dispersion 80 bis 100 Gew.-%, stärker bevorzugt 92 bis 100 Gew.-% beträgt.

21. Dispersion nach einem der vorhergehenden Ansprüche, wobei die Viskosität der Dispersion von 20 mPas.s bis 5000 mPa.s beträgt.

22. Verfahren zum Herstellen der Dispersion nach einem der vorhergehenden Ansprüche, wobei das Verfahren die folgenden Schritte umfasst:

(i) Herstellen einer Dispersion von Polymerteilchen (B1) in einem flüssigen Medium, das Wasser und bevorzugt mindestens eine Verbindung umfasst, die aus der Gruppe ausgewählt ist, die aus Ethanol, 1-Propanol, 2-Propanol, Ethylacetat, n-Propylacetat, Isopropylacetat, Aceton, Methylethylketon und einem beliebigen Gemisch von mindestens zwei dieser Verbindungen besteht, wobei die Menge an Wasser im Verhältnis zur Menge an Polymerteilchen (B1) bevorzugt weniger als 1,5 : 1, stärker bevorzugt weniger als 1 : 1, stärker bevorzugt weniger als 1 : 2 und noch stärker bevorzugt weniger als 1 : 5 beträgt,
(ii) gegebenenfalls Entfernen eines Teils des Wassers, das in der in Schritt (i) erhaltenen Dispersion vorhanden ist, und
(iii) gegebenenfalls Zugabe mindestens einer Verbindung, die aus der Gruppe ausgewählt ist, die aus Ethanol, 1-Propanol, 2-Propanol, Ethylacetat, n-Propylacetat, Isopropylacetat, Aceton, Methylethylketon und einem beliebigen Gemisch von mindestens zwei dieser Verbindungen (A2) besteht, zu der in Schritt (i) oder (ii) erhaltenen Dispersion von Polymerteilchen (B1).

23. Verfahren nach Anspruch 22 zum Herstellen der Dispersion nach einem der Ansprüche 14 bis 19 oder 20 bis 21 (bei Abhängigkeit von den Ansprüchen 14 bis 19), wobei das Verfahren ferner umfasst

(iv) Erhalten eines Gemisches aus Polymer (B2) und mindestens einer Verbindung, die aus der Gruppe ausgewählt ist, die aus Ethanol, 1-Propanol, 2-Propanol, Ethylacetat, n-Propylacetat, Isopropylacetat, Aceton, Methylethylketon und einem beliebigen Gemisch aus mindestens zwei dieser Verbindungen besteht,
(v) Mischen der in Schritt (i), (ii) oder (iii) erhaltenen Dispersion mit dem in Schritt (iv) erhaltenen Gemisch und gegebenenfalls weitere Zugabe mindestens einer Verbindung, die aus der Gruppe ausgewählt ist, die aus Ethanol, 1-Propanol, 2-Propanol, Ethylacetat, n-Propylacetat, Isopropylacetat, Aceton, Methylethylketon und einem beliebigen Gemisch aus mindestens zwei dieser Verbindungen besteht.

24. Beschichtungszusammensetzung, umfassend die Dispersion nach einem der Ansprüche 1 bis 21 oder erhalten nach dem Verfahren gemäß Anspruch 22 bis 23 und gegebenenfalls weiterhin umfassend mindestens eine der folgenden Komponenten: Haftvermittler, Vernetzungsmittel, Pigmentteilchen, gelöster Farbstoff, Wachs, anorganisches Füllstoffteilchen, rheologiemodifizierendes Mittel.

25. Verfahren zum Herstellen eines beschichteten Substrats, wobei das Verfahren (i) das Aufbringen einer Beschichtungszusammensetzung nach Anspruch 24 auf ein Substrat und (ii) das Trocknen der Beschichtungszusammensetzung durch Verdampfen von flüchtigen Bestandteilen umfasst, um ein beschichtetes Substrat zu erhalten.

26. Verfahren nach Anspruch 25, wobei das Substrat aus der Gruppe ausgewählt ist, die aus

a) Kunststofffolien wie Polypropylen, Polyethylen, Polyester, Polyamid, PVC, Polycarbonat, Polystyrol, Polyurethan, PET, biaxial orientiertes Polypropylen und biaxial orientierte PET-Kunststofffolien,
b) Leder, Kunstleder; natürliche und gewebte synthetische Stoffe wie Baumwolle, Wolle, Viskose; Vliesstoffe,
c) Metallsubstrate wie Aluminium und vakuummetallisierte Kunststoffsubstrate,
d) Foliensubstrate, die durch Koronaentladung vorbehandelt oder mit einem Primer oder einer coextrudierten Polymerschicht chemisch vorbehandelt wurden, um die Haftung zu verbessern,
e) Papier,
f) Karton, und
g) eine Kombination aus a), b), c), d), e) und/oder f) besteht.

27. Verfahren nach Anspruch 25 oder 26, wobei das Auftragen der Beschichtungszusammensetzung durch Druck- oder Walzenbeschichtungstechnik erfolgt.

28. Verfahren nach Anspruch einem der Ansprüche 25 bis 27, wobei die Beschichtung eine Trockendicke von 0,5 bis 150 $\mu$m, bevorzugt von 0,5 bis 50 $\mu$m, stärker bevorzugt von 1 bis 20 $\mu$m, noch stärker bevorzugt von 1 bis 10 $\mu$m und noch stärker bevorzugt von 1 bis 5 $\mu$m aufweist.

29. Verfahren nach Anspruch einem der Ansprüche 25 bis 28, wobei die Beschichtung ein Überdrucklack ist.

30. Tinte, umfassend eine Beschichtungszusammensetzung nach Anspruch 24 und ein Farbmittel.

31. Verfahren zum Drucken eines Bildes auf ein Substrat, bei dem eine Tinte nach Anspruch 30 aufgetragen wird.

**Revendications**

1. Dispersion comprenant

(A) un fluide porteur en une quantité de 35 à 95 % en poids, le fluide porteur comprenant :

(A1) de l'eau et
(A2) au moins un composé choisi dans le groupe constitué par l'éthanol, le 1-propanol, le 2-propanol, l'acétate d'éthyle, l'acétate de n-propyle, l'acétate d'isopropyle, l'acétone, la méthyléthylcétone et un quelconque mélange d'au moins deux de ces composés,
la quantité d'eau (A1) par rapport au fluide porteur (A) étant inférieure à 85 % en poids et la quantité d'eau par rapport à la dispersion étant de 1 à 30 % en poids ; et

(B) un ou plusieurs polymères en une quantité de 5 à 65 % en poids, le ou les polymères comprenant :
(B1) des particules polymères ayant une taille moyenne de particule en volume de 1 $\mu$m à 20 $\mu$m, le polymère des particules polymères (B1) ayant une masse moléculaire moyenne en poids d'au moins 250 kilodaltons, au moins 50 % en poids des particules polymères (B1) étant insolubles dans de la *N*-méthylpyrrolidone contenant 10 mM de LiBr et 8 pour cent en volume d'hexafluoroisopropanol et le polymère des particules polymères (B1) étant choisi dans le groupe constitué par le polyuréthane, un hybride polyuréthane-polyacrylate et un quelconque mélange de ceux-ci ; et
les quantités de (A) et (B) étant données par rapport à la quantité totale de (A) et (B).

2. Dispersion selon la revendication 1, dans laquelle la quantité d'eau (A1) par rapport au fluide porteur (A) est inférieure à 60 % en poids, de préférence inférieure à 50 % en poids, plus préférablement inférieure à 40 % en poids et le plus préférablement inférieure à 30 % en poids.

3. Dispersion selon l'une quelconque des revendications précédentes, dans laquelle le composé (A2) comprend de l'éthanol, du 1-propanol, du 2-propanol ou un mélange d'au moins deux de ces composés, de préférence au moins 20 % en poids du composé (A2) est de l'éthanol, du 1-propanol, du 2-propanol ou un mélange d'au moins deux de ces composés, plus préférablement au moins 50 % en poids du composé (A2) est de l'éthanol, du 1-propanol, du 2-propanol ou un mélange d'au moins deux de ces composés, plus préférablement encore au moins 75 % en poids du composé (A2) est de l'éthanol, du 1-propanol, du 2-propanol ou un mélange d'au moins deux de ces composés, plus préférablement encore au moins 90 % en poids du composé (A2) est de l'éthanol, du 1-propanol, du 2-propanol ou un mélange d'au moins deux de ces composés.

4. Dispersion selon la revendication 1 ou 2, dans laquelle le composé (A2) est choisi dans le groupe constitué par l'éthanol, le 1-propanol, le 2-propanol et un quelconque mélange d'au moins deux de ces composés.

5. Dispersion selon la revendication 1 ou 2, dans laquelle le composé (A2) est constitué d'éthanol et d'acétate d'éthyle, la quantité d'acétate d'éthyle étant de préférence d'au maximum 50 % en poids (par rapport au composé (A2)), plus préférablement d'au maximum 25 % en poids, plus préférablement encore d'au maximum 10 % en poids, plus préférablement encore d'au maximum 2 % en poids et le plus préférablement de 0 % en poids.

6. Dispersion selon l'une quelconque des revendications précédentes, dans laquelle le polymère des particules polymères (B1) a une masse moléculaire moyenne en poids d'au moins 350 kilodaltons.

7. Dispersion selon l'une quelconque des revendications précédentes dans laquelle la taille de particule (D[0,5]) des particules polymères (B1) est de préférence supérieure à 1 micromètre, plus préférablement supérieure à 1,2 micromètre et particulièrement préférablement supérieure à 1,5 micromètre.

8. Dispersion selon l'une quelconque des revendications précédentes dans laquelle la taille de particule (D[0,9]) des particules polymères (B1) est de préférence inférieure à 50 micromètres, plus préférablement inférieure à 35 micromètres, plus préférablement inférieure à 20 micromètres.

9. Dispersion selon l'une quelconque des revendications précédentes, dans laquelle au moins 70 % en poids, de préférence au moins 80 % en poids, le plus préférablement au moins 90 % en poids des particules polymères (B1) sont insolubles dans de la N-méthylpyrrolidone contenant 10 mM de LiBr et 8 pour cent en volume d'hexafluoroisopropanol.

10. Dispersion selon l'une quelconque des revendications précédentes, dans laquelle le polymère des particules polymères (B1) est un polyuréthane qui est le produit réactionnel d'au moins les composants suivants :

(a) de 10 à 50 % en poids, de préférence de 12 à 45 % en poids, plus préférablement de 15 à 40 % en poids d'au moins un polyisocyanate organique possédant une fonctionnalité d'au moins 2,

(b) de 0 à 4 % en poids, de préférence de 0,5 à 4 % en poids, 0,7 à 3 % en poids et plus préférablement encore de 1 à 2 % en poids d'un composé réactif avec les isocyanates contenant des groupes de dispersion dans l'eau ioniques ou potentiellement ioniques ayant de préférence une masse moléculaire de 100 à 500 g/mol,

(c) de 35 à 85 % en poids, de préférence de 40 à 79 % en poids et plus préférablement encore de 45 à 75 % en poids d'au moins un polyol réactif avec les isocyanates autre que (b) ayant de préférence une masse moléculaire de 500 à 5000,

(d) de 0 à 10 % en poids, de préférence de 0,25 à 7 % en poids et plus préférablement de 0,5 à 5 % en poids d'au moins un composé d'allongement de chaîne à hydrogène actif possédant une fonctionnalité d'au moins 2 (autre que l'eau),

les quantités de (a), (b), (c) et (d) étant données par rapport à la quantité totale de (a), (b), (c) et (d) et les groupes isocyanate et hydroxy sur les composants utilisés pour préparer le polyuréthane étant présents en un rapport molaire respectif (NCO sur OH) dans la plage de 0,8:1 à 5:1, de préférence de 1,2:1 à 4:1 et plus préférablement encore de 1,5:1 à 3,5:1.

11. Dispersion selon l'une quelconque des revendications précédentes, dans laquelle les particules polymères (B1) sont réticulées pendant la préparation des particules polymères.

12. Dispersion selon la revendication 10 ou 11, dans laquelle le polymère des particules polymères (B1) est un polyuréthane qui est le produit réactionnel d'au moins les composants (a), (b), (c), (d) suivants et d'au moins l'un des composants de ramification (e) suivants possédant une fonctionnalité moyenne au-dessus de 2 :

(e1) de 5 à 50 % en poids, plus préférablement de 15 à 45 % en poids, plus préférablement encore de 20 à 40 % en poids du composant (a) comprenant au moins un polyisocyanate organique possédant une fonctionnalité moyenne > 2,3, plus préférablement > 2,5 et le plus préférablement > 2,9 ;

(e2) de 1 à 40 % en poids, de préférence de 1,5 à 20 % en poids, plus préférablement de 2 à 10 % en poids du composant (c) comprenant au moins un polyol ayant une masse moléculaire de 500 à 5000 g/mol et une fonctionnalité moyenne d'au moins 2,3, plus préférablement d'au moins 2,6, le plus préférablement d'au moins 2,9 et de préférence une température de transition vitreuse $T_g$ de -110 °C à +110 °C ;

(e3) de 1 à 10 % en poids, de préférence de 1,5 à 7 % en poids, le plus préférablement de 2 à 5 % en poids du composant (c) comprenant un polyol ayant une masse moléculaire de 90 à 499 g/mol, de préférence de 120 à 400 g/mol, plus préférablement de 125 à 350 g/mol et une fonctionnalité hydroxyle supérieure à 2 ;

(e4) au moins 20 % en poids, de préférence au moins 35 % en poids, le plus préférablement au moins 50 % en poids, particulièrement préférablement au moins 70 % en poids du composant (d) comprenant au moins un composé d'allongement de chaîne à hydrogène actif possédant une fonctionnalité supérieure ou égale à 3.

13. Dispersion selon l'une quelconque des revendications 10-12, dans laquelle au moins 5 % en poids, de préférence au moins 25 % en poids, de préférence au moins 55 % en poids et le plus préférablement au moins 75 % en poids du composant (c) (quantité donnée sur la base du poids total de composant (c)) est insoluble dans l'eau et le composé (A2) dans les conditions standards, lorsque le rapport pondéral du composé (A2) à l'eau est d'au moins 50:50, de préférence d'au moins 75:25, le composé (A2) utilisé dans cette méthode de caractérisation étant le même composé (A2) que celui utilisé pour préparer les particules polymères dispersées.

14. Dispersion selon l'une quelconque des revendications 1 à 13, la dispersion comprenant en outre un ou plusieurs polymères (B2) autres que (B1), le rapport pondéral des particules polymères (B1) à l'autre polymère ou aux autres polymères (B2) étant de 95:5 à 5:95, de préférence de 90:10 à 25:75, plus préférablement de 80:20 à 35:65.

15. Dispersion selon la revendication 14, dans laquelle la masse moléculaire moyenne en poids du second polymère (B2) est de 5 kDa à 600 kDa, plus préférablement de 5 kDa à 400 kDa, plus préférablement de 10 kDa à 200 kDa, plus préférablement de 15 kDa à 100 kDa et le plus préférablement de 30 kilodaltons à 90 kilodaltons.

16. Dispersion selon la revendication 14 ou 15, dans laquelle la quantité d'eau (A1) par rapport au fluide porteur (A) est inférieure à 30 % en poids, de préférence inférieure à 20 % en poids, plus préférablement inférieure à 15 % en poids, plus préférablement inférieure à 10 % en poids et le plus préférablement inférieure à 5 % en poids.

17. Dispersion selon l'une quelconque des revendications 14 à 16, dans laquelle le ou les polymères (B2) sont choisis dans le groupe constitué par les polyamides, la nitrocellulose, les polyacrylates, les polyuréthanes, les polyesters, le poly(butyral de vinyle), la polyvinylpyrrolidone, l'hydroxypropylcellulose, l'hydroxyéthylcellulose, l'acétate et butyrate de cellulose, l'acétate et propionate de cellulose et un quelconque mélange d'au moins deux de ces polymères.

18. Dispersion selon l'une quelconque des revendications 14 à 16, dans laquelle le ou les polymères (B2) sont choisis dans le groupe constitué par les polyamides, les polyuréthanes à base de polyéther, les polyacrylates et un quelconque mélange d'au moins deux de ces polymères.

19. Dispersion selon l'une quelconque des revendications 14 à 16, dans laquelle le ou les polymères (B2) sont un ou plusieurs polyuréthanes comprenant des polyols choisis parmi des polypropylèneglycols possédant une masse moléculaire de 500 à 5000 et contenant au moins 30 % en poids, plus préférablement au moins 50 % en poids, le plus préférablement au moins 65 % en poids de polypropylèneglycol sur la base du poids total du polyuréthane.

20. Dispersion selon l'une quelconque des revendications précédentes, dans laquelle la quantité totale du fluide porteur (A) et du ou des polymères (B) par rapport à la dispersion est de 80 à 100 % en poids, plus préférablement de 92 à 100 % en poids.

21. Dispersion selon l'une quelconque des revendications précédentes, la viscosité de la dispersion étant de 20 mPa.s à 5000 mPa.s.

22. Procédé pour préparer la dispersion selon l'une quelconque des revendications précédentes, le procédé comprenant les étapes suivantes :

(i) la préparation d'une dispersion de particules polymères (B1) dans du milieu liquide comprenant de l'eau et de préférence au moins un composé choisi dans le groupe constitué par l'éthanol, le 1-propanol, le 2-propanol, l'acétate d'éthyle, l'acétate de n-propyle, l'acétate d'isopropyle, l'acétone, la méthyléthylcétone et un quelconque mélange d'au moins deux de ces composés, la quantité d'eau par rapport à la quantité de particules polymères (B1) étant de préférence inférieure à 1,5:1, plus préférablement inférieure à 1:1, plus préférablement inférieure à 1:2 et plus préférablement encore inférieure à 1:5,
(ii) éventuellement l'élimination d'une partie de l'eau présente dans la dispersion obtenue dans l'étape (i) et
(iii) éventuellement l'ajout d'au moins un composé choisi dans le groupe constitué par l'éthanol, le 1-propanol, le 2-propanol, l'acétate d'éthyle, l'acétate de n-propyle, l'acétate d'isopropyle, l'acétone, la méthyléthylcétone et un quelconque mélange d'au moins deux de ces composés (A2) à la dispersion de particules polymères (B1) obtenue dans l'étape (i) ou (ii).

23. Procédé selon la revendication 22 pour préparer la dispersion selon l'une quelconque des revendications 14 à 19 ou 20 à 21 (lorsqu'elles dépendent des revendications 14 à 19), le procédé comprenant en outre

(iv) l'obtention d'un mélange de polymère (B2) et d'au moins un composé choisi dans le groupe constitué par l'éthanol, le 1-propanol, le 2-propanol, l'acétate d'éthyle, l'acétate de n-propyle, l'acétate d'isopropyle, l'acétone, la méthyléthylcétone et un quelconque mélange d'au moins deux de ces composés,
(v) le mélange de la dispersion obtenue dans l'étape (i), (ii) ou (iii) avec le mélange obtenu dans l'étape (iv) et éventuellement l'ajout supplémentaire d'au moins un composé choisi dans le groupe constitué par l'éthanol, le 1-propanol, le 2-propanol, l'acétate d'éthyle, l'acétate de n-propyle, l'acétate d'isopropyle, l'acétone, la méthyléthylcétone et un quelconque mélange d'au moins deux de ces composés.

24. Composition de revêtement comprenant la dispersion selon l'une quelconque des revendications 1 à 21 ou obtenue avec le procédé selon la revendication 22 à 23 et comprenant éventuellement en outre au moins l'un des composants suivants : un promoteur d'adhérence, un agent de réticulation, des particules de pigment, un colorant dissous, de la cire, des particules de charge inorganique, un agent modificateur de rhéologie.

25. Procédé pour la préparation d'un substrat revêtu, le procédé comprenant (i) l'application d'une composition de revêtement selon la revendication 24 sur un substrat et (ii) le séchage de la composition de revêtement par évaporation de composés volatils pour obtenir un substrat revêtu.

26. Procédé selon la revendication 25, dans lequel le substrat est choisi dans le groupe constitué par

a) les films plastiques tels que les films plastiques de polypropylène, de polyéthylène, de polyester, de polyamide, de PVC, de polycarbonate, de polystyrène, de polyuréthane, de PET, de polypropylène biorienté et de PET biorienté,

b) le cuir, le similicuir ; les tissus naturels et synthétiques tissés tels que le coton, la laine, la rayonne ; les non-tissés,

c) les substrats métalliques comme l'aluminium et les substrats en plastique métallisés sous vide,

d) les substrats sous forme de film qui sont prétraités par traitement corona ou qui ont été chimiquement prétraités avec un apprêt ou une couche de polymère coextrudée conçue pour améliorer l'adhérence,

e) le papier,

f) le carton et

g) une association de a), b), c), d), e) et/ou f).

27. Procédé selon la revendication 25 ou 26, dans lequel l'application de la composition de revêtement est effectuée par une technique d'impression ou de revêtement au rouleau.

28. Procédé selon la revendication l'une quelconque des revendications 25 à 27, dans lequel le revêtement a une épaisseur à sec de 0,5 à 150 $\mu$m, de préférence de 0,5 à 50 $\mu$m, plus préférablement de 1 à 20 $\mu$m, plus préférablement encore de 1 à 10 $\mu$m et plus préférablement encore de 1 à 5 $\mu$m.

29. Procédé selon la revendication l'une quelconque des revendications 25 à 28, dans lequel le revêtement est un vernis de surimpression.

30. Encre comprenant une composition de revêtement selon la revendication 24 et une matière colorante.

31. Procédé pour l'impression d'une image sur un substrat comprenant l'application d'une encre selon la revendication 30.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010015494 A
- US 6605666 B1
- EP 2524943 A
- US 20090111934 A
- WO 2006104664 A
- WO 03089487 A
- WO 03054903 A
- US 20090012226 A
- WO 2008101661 A
- EP 2399741 B1
- US 6605666 B

**Non-patent literature cited in the description**

- **G. OERTEL.** Polyurethane Handbook. Carl Hanser, 1994